# EUROPÄISCHE PATENTSCHRIFT

(11) **EP 2 174 780 B1**
(45) Veröffentlichungstag und Bekanntmachung des Hinweises auf die Patenterteilung: **04.04.2012**
(21) Anmeldenummer: 08166341.1
(22) Anmeldetag: 10.10.2008
(51) Int. Cl.: B32B 7/02, E04F 15/16

(54) **Aufwickelbarer Fliesenaufbau, Verfahren zur Herstellung sowie die Verwendung**
Rollable tile structure, production method and use
Structure de carreaux enroulable, procédé de fabrication et utilisation

(43) Veröffentlichungstag der Anmeldung: 14.04.2010
(73) Patentinhaber: Sika Technology AG, 6341 Baar (CH); Clariant International Ltd., 4132 Muttenz (CH); Sicoa AG, 8200 Schaffhausen (CH); Korff AG, 4538 Oberbipp (CH); Nauer, Marcel, 6315 Oberägeri (CH); Kummer, Alex, 4242 Laufen (CH)
(72) Erfinder: Brand, Stefan, Dr., 69493 Hirschberg-Leutershausen (DE); Liebe, Hubert, 65207 Wiesbaden (DE); Kummer, Alex, 4242 Laufen (CH); Nauer, Marcel, 6315 Oberägeri (CH); Blank, Norman, 8803 Rüschlikon (CH); Erb, Urs, 2544 Bettlach (CH); Jenny, Harald, 8200 Schaffhausen (CH)
(74) Vertreter: Behnisch, Werner

(56) Entgegenhaltungen:
- WO-A-2007/082661
- DE-U1-202004 006 531

## Beschreibung

Die Erfindung betrifft einen aufwickelbaren Fliesenaufbau, ein Verfahren zur Herstellung des Fliesenaufbaus sowie die Verwendung dieses Fliesenaufbaus zur Herstellung eines Fliesenbelages. Weiterhin betrifft die Erfindung die Verwendung von organischen Polysilazanen bei der Herstellung eines aufwickelbaren Fliesenaufbaus.

Fliesen, wie beispielsweise keramische Fliesen, sind in einer Vielzahl unterschiedlicher Variationen kommerziell erhältlich. Sie unterscheiden sich durch ihre Struktur, durch die Materialien, aus denen sie hergestellt werden, sowie durch ihre Eigenschaften.

Keramische Fliesen bestehen in der Regel aus einem Gemisch aus Kaolin, Feldspat, Quarz und Ton, der mit einer keramischen Beschichtung überzogen, teilweise mit Mustern bedruckt und teilweise mit Strukturen versehen ist. Eine Einteilung der unterschiedlichen keramischen Fliesen in z.B. Innenwand-, Boden-, Decken-, Küchen-, Badezimmer-, Außenwandfliesen und industrielle keramische Fliesen ist durch die verwendeten Materialien und Herstellungsbedingungen gegeben.

Aus dem Stand der Technik sind zudem keramische nicht flexible und nicht aufwickelbare Fliesen mit speziellen Eigenschaften bekannt. So werden aufverschiedenen Webseiten, z.B. unter "www.nanooberflaechenschutz.de, keramische Fliesen mit nanoversiegelten Oberflächen beschrieben. Die Beständigkeit solcher funktionalen Oberflächen ist häufig sehr gering, weshalb sie insbesondere durch Scheuermittel leicht abgerieben werden und in die Umwelt gelangen können.

Eine in den letzten Jahren verstärkt aufgekommene Variante nicht flexibler, nicht aufwickelbarer keramischer Fliesen sind solche Fliesen, die selbstreinigende, Antigraffitti- und/oder antimikrobielle Wirkungen aufweisen. Solche keramische Fliesen werden zum Beispiel unter der Kennzeichnung "Hydrotect" beworben.

Aus der WO 2005/080684 ist ein keramischer Wandverkleidungsverbund bekannt, bestehend aus einem Trägermaterial und mindestens einer keramischen Beschichtung, wobei optional eine keramische Zwischenschicht vorhanden sein kann. Die Wandverkleidungsverbunde der WO 2005/080684 sind Tapeten, die in der keramischen Beschichtung keramische Partikel in einem Silizium aufweisenden Netzwerk enthalten, welches durch Si-O-Si-Brücken verknüpft ist. Bei dem Silizium aufweisenden Netzwerk der keramischen Beschichtung handelt es sich entweder um ein rein anorganisches Netzwerk, welches über die Sauerstoffbrücken gebildet wird, oder aber um ein anorganisch-organisches Netzwerk, bei welchem die organischen Reste an das Silizium gebunden sind. Zur Herstellung dieses Netzwerks werden keramische Partikel in einem polymeren Sol suspendiert, welches durch Vermischen zumindest eines Silans mit einem Alkohol und einer Säure herstellbar ist. Diese Suspension wird auf das Trägermaterial aufgebracht und anschließend verfestigt. Zwischen dem Trägermaterial und der keramischen Beschichtung ist eine keramische Zwischenschicht vorgesehen, welche durch ein Sol-Gel-Verfahren hergestellt wird, wobei das Sol als anorganischer Kleber fungiert. Fliesenbeläge, insbesondere keramische Fliesenbeläge und der zugehörige Fliesenaufbau, der in seiner Gesamtheit flexibel und aufwickelbar ist, werden nicht beschrieben. Die Nachteile von Sol/Gel-Beschichtungen sind hinlänglich bekannt. So ist die Haltbarkeit von Sol/Gel-Beschichtungssystemen durch die notwendige Verwendung von sauren oder alkalischen Katalysatoren nur von kurzer Dauer. Außerdem zeigen die entsprechenden Beschichtungssysteme in der Regel keine ausreichende Haftung zum Substrat.

Aus der JP 2006150337 sind beschichtete Gegenstände aus Beton bekannt. Die Betonoberfläche wird mit einer Zwischenschicht aus einem leicht elastischen Material versehen, die ein Epoxiharz, ein Urethanharz und/oder Acrylsäureharz enthalten kann. Diese Zwischenlage wird mit einer Oberflächenschicht aus einem Polysilazan belegt, um eine ausreichende Härte der Beschichtung zu erhalten. Die Oberflächenbeschichtung ist so ausgelegt, dass bei einer Rissbildung des Trägermaterials aus Beton die Beschichtung nicht zerstört wird. Der so hergestellte Gegenstand ist weder flexibel noch aufrollbar, sondern starr und damit zur Herstellung eines aufwickelbaren Fliesenmaterials ungeeignet.

Aus der WO 2006/108503 ist ein Verfahren zur Verbesserung der Barriereeigenschaften keramischer Sperrschichten bekannt. Um die Durchtrittssperrwirkung für Wasserdampf und Gase bei einem flexiblen Trägermaterial zu verbessern, wird eine Sperrschicht aus keramischem Material mit einer Lösung von Perhydropolysilazan beschichtet und nachfolgend unter Ausbildung einer Siliziumoxidschicht ausgehärtet. Als flexible Trägermaterialien werden Kunststofffolien, Kunststofffilme oder Laminate mit einem Kunststofffilm, auf den die Abscheidung der keramischen Sperrschicht erfolgt, vorgeschlagen. Als Sperrschichten aus keramischem Material mit einer Dicke 10 nm bis 200 nm werden Schichten aus Al₂O₃ oder SiOₓ beschrieben.

Was die Anwendungszwecke der vorgeschlagenen keramischen Sperrschichten anbelangt, wird auf die US-A-5645923 hingewiesen, die Gasbarriereschichten für Verpackungsfolien beschreibt. Weiterhin wird auf flexible Ultrabarrierestrukturen gemäß dem Stand der Technik hingewiesen, wie sie z.B. für flexible Oled-Displays oder für organische Photovoltaik-Strukturen benötigt werden. Weiterhin wird auf Barriereschichten bei Kunststofffolien hingewiesen. Der Fachmann erhält damit aus der WO 2006/108503 den Hinweis, die vorgeschlagene Perhydropolysilazanbeschichtung bei Folienverbundstoffen für Verpackungen, bei Displays und im Bereich der Photovoltaik einzusetzen. Einen Hinweis zur Verwendung eines Schichtenverbundes in Verbindung mit Perhydrosilazanen für Fliesenaufbauten ist diesen Dokumenten nicht zu entnehmen. Aus diesem Grunde werden auch die für Fliesen zwingend erforderlichen Eigenschaften, beispielsweise die Abriebfestigkeit, die Säurebeständigkeit, Fleckempfindlichkeit und die Härte, nicht erwähnt. Vielmehr beschreibt dieses Dokument keramische Sperrschichten in Verbindung mit Kunststofffilmen.

Die US-A-2553314 beschreibt ein Verfahren, um die Oberflächen von Materialien wasserabstoßend zu machen. Hierbei werden flüssige Methylsiliziumaminverbindungen auf Oberflächen wie Papier, Baumwolle, Wolle, Keramikkörper, Aluminium usw. aufgebracht. Die Verwendung von organischen Polysilazanen als Oberlächenbeschichtung für Fliesenaufbauten zur Herstellung von Fliesenbelägen wird nicht beschrieben. Auf die spezifischen Anforderungen von Fliesen wie Härtegrade, Abriebfestigkeit, Säurebeständigkeit und Fleckempfindlichkeit wird nicht eingegangen, ebenfalls nicht auf spezifische Schichtkombinationen zur Herstellung von Fliesenaufbauten.

Die US-A-6383642 beschreibt transparente Trägermaterialien mit einer hydrophoben bzw. oleophobcn Beschichtung, die durch Plasma-CVD gebildet wird. Siliziumverbindungen wie Silane, Alkoxysilane, Fluorosilane, Siloxane oder Silazane werden in der Dampfphase auf einem Trägermaterial zur Ausbildung einer Oberflächenbeschichtung abgeschieden, um eine Schmutz- und Wasserbeständigkeit auf unterschiedlichsten Oberflächen, beispielsweise auf Möbeln, Türen, Glaskeramikplatten, Badewannen sowie Wasserbecken, zu erreichen. Schichtaufbauten, wie sie erfindungsgemäß zur Herstellung eines aufwickelbaren Fliesenaufbaus beschrieben werden, sind nicht offenbart. Auf die speziellen Eigenschaften von Fliesenaufbauten wie beispielsweise die erforderlichen Härtegrade, die Säurebeständigkeit, Fleckempfindlichkeit, Abriebfestigkeit usw. wird aus diesem Grund ebenfalls nicht eingegangen.

Aus der US-A-6080455 sind Schutzhüllen für Radome für Raketen bekannt, wobei eine Titandioxid enthaltende Polysiloxanschicht als Beschichtung einer mit einem Harz imprägnierten Quartzverkleidung übergeschlagen wird. Die Verwendung von Polysilazanen bei der Herstellung von flexiblen aufwickelbaren Fliesenaufbauten wird nicht beschrieben.

Aus der JP 2000073012 ist ein Beschichtungsmittel mit UV-schützenden und wasserabweisenden Eigenschaften bekannt, das beispielsweise für Gummiprodukte einsetzbar ist. Es handelt sich um eine Aminreste enthaltende Polysilazanformulierung. Die Verwendung von Polysilazanoberflächenschichten bei der Herstellung von Fliesenaufbauten wird hierdurch nicht nahegelegt. Es ist offensichtlich, dass Gummiprodukte völlig andere Eigenschaften aufweisen müssen als Fliesenaufbauten.

Die WO 2007/082661 beschreibt einen flexiblen, insbesondere rollfähigen Bodenbelag mit einer Trägerschicht sowie einer auf dieser vorgesehenen, eine plane und/oder strukturierte Oberfläche ausbildenden Deckschicht, wobei die Deckschicht eine mittels eines strahlenhärtenden Harzes sowie abrasiver Füllstoffe abriebfest beschichtete Papier- oder Kunststofffolie aufweist und die Trägerschicht mehrlagig ausgebildet ist.

Die DE 20 2004 006 531 U1 beschreibt einen Bodenbelag mit zumindest einer, auf einen Boden auslegbaren Abdecklage, die mehrere Fugen und mehrere, durch die Fugen voneinander getrennte Trittflächen mit erhabener Oberfläche aufweist. Die Fugen sind mit einer Beschichtung versehen, die in ihrer äußeren Erscheinung von der Erscheinung der Abdecklage verschieden ist. Der erhabene Bereich der Trittfläche ist nicht beschichtet.

Aus der WO 2003/106190 sind Schutzbeschichtungen für Dokumente wie Kreditkarten, Ausweise und andere Kunststoffkarten bekannt. Textile Materialen, Papier und/oder Kunststoffmaterialien werden mit einer keramische Materialien sowie Silane und/oder Silazane enthaltenden Schutzbeschichtung versehen. Die Anforderungen an Schutzbeschichtungen für Dokumente einerseits sowie an die Dokumentenmaterialien andererseits sind von völlig anderer Natur als die Anforderungen, die an Materialien für Fliesenaufbauten zu stellen sind, insbesondere was die Härtegrade, Säurebeständigkeit, Abriebfestigkeit usw. anbelangt. Ein weiterer wesentlicher Unterschied liegt in den Kombinationen einzelner Schichtmaterialien zur Herstellung eines aufwickelbaren Fliesenaufbaus, die durch die WO 03/106190 nicht nahegelegt werden.

Die WO 2005/068181 beschreibt photokatalytische Teilchen für Fußbodenlaminate, wobei das Laminat Bindermaterialien enthält, die aus einer breiten Vielzahl von Zusammensetzungen auswählbar sind, wozu beispielsweise Melaminharze, Polyesterharze, Polyurethanharze, Polysilanharze, Polysiloxanharze, Silazanharze, Acrylamidharze, Acrylurethanharze sowie Polyacrylamidharze, um nur einige zu nennen, gehören. Das Laminat umfasst eine dekorative Außenschicht, die wahlweise eine Schutzschicht und eine Basisschicht aufweist, wobei die dekorative obere Schicht ein Netzwerk an Fasern umfasst, in welche die photokatalytisch aktiven Teilchen in einem Bindemittel eingebettet liegen. Als Fasermaterialien werden beispielsweise Zellulosefasern eingesetzt, als photokatalytisch aktive Teilchen beispielsweise Verbindungen wie Titandioxid, Eisen(III)Oxid, Zinkoxid usw. Die Verwendung von organischen Polysilazanen bei der Herstellung von aufwickelbaren Fliesenaufbauten wird durch dieses Dokument nicht umfasst oder nahegelegt. Auf die speziellen, für Fliesenaufbauten erforderlichen Eigenschaften, insbesondere die Einhaltung der erforderlichen Härtegrade sowie die Kombination einzelner Schichten wird nicht eingegangen.

Das Einsatzgebiet moderner keramischer Fliesen vergrößert sich stetig. Zudem werden durch die zunehmenden Anforderungen an einfache Verlegbarkeit und einfache Renovierfähigkeit immer speziellere Anforderungen an die keramischen Fliesen gestellt. Gleichzeitig sollen die keramischen Fliesen vielseitig gestaltbar und insbesondere in der Montage deutlich kostengünstiger sein. Es besteht somit ein stetiger Bedarf an neuen keramischen Fliesen. Neue keramische Fliesen sollen nach Möglichkeit wesentlich leichter handhabbar sein und trotzdem eine gute Haltbarkeit aufweisen.

Aufgabe der vorliegenden Erfindung ist es daher, Fliesenaufbauten, insbesondere keramische Fliesenaufbauten, zur Verfügung zu stellen, die aufwickelbar sind, einfach montiert und gehandhabt werden können, und eine gute Kratzfestigkeit, Waschbarkeit, Chemikalienresistenz und Langzeitstabilität aufweisen. Ferner soll ein Verfahren zur Herstellung dieser Fliesenaufbauten bereitgestellt werden.

Diese Aufgabe wird erfindungsgemäß durch einen Fliesenaufbau nach Anspruch 1 gelöst, wobei eine Trägerschicht und eine Oberflächenschicht miteinander verbunden sind und die Oberflächenschicht ein ausgehärtetes organisches Polysilazan-Netzwerk aufweist, wobei der Fliesenaufbau insgesamt aufwickelbar ausgebildet ist.

Bevorzugte Ausgestaltungen der Erfindung ergeben sich aus den beiliegenden Patentansprüchen sowie der nachfolgenden Beschreibung und den Figuren.

Es wurde überraschenderweise festgestellt, dass durch die Verwendung eines ausgehärteten organischen Polysilazan-Netzwerkes als Oberflächenbeschichtung des Fliesenaufbaus Fliesen herstellbar sind, die so dünn sind, dass sie aufgewickelt werden können, ohne dass die bekannten Flieseneigenschaften verloren gehen. Durch die Verwendung von organischen Polysilazanen ist es unerwarteter Weise auch gelungen, eine aufwickelbare Glasur zu entwickeln und zu applizieren, die den höchsten Ansprüchen an Hygiene, Reinigungsfähigkeit, Kratzfestigkeit und Chemikalienresistenz der Fliesenoberfläche gerecht wird und die eine große Langzeitstabilität aufweist. Der erfindungsgemäße Fliesenaufbau ist damit in seiner Gesamtheit flexibel und aufwickelbar.

Die Figuren zeigen:
- Fig. 1: einen Querschnitt eines aufwickelbaren Fliesenaufbaus mit Verbindung zum Untergrund gemäß einem bevorzugten Ausführungsbeispiel der vor- liegenden Erfindung welcher, von der Außenoberfläche nach Innen zum Untergrund hin, folgenden Aufbau besitzt:
- Oberflächenschicht (2) aus ausgehärteten organischen Polysilazanen
- erste Trägerschicht (1)

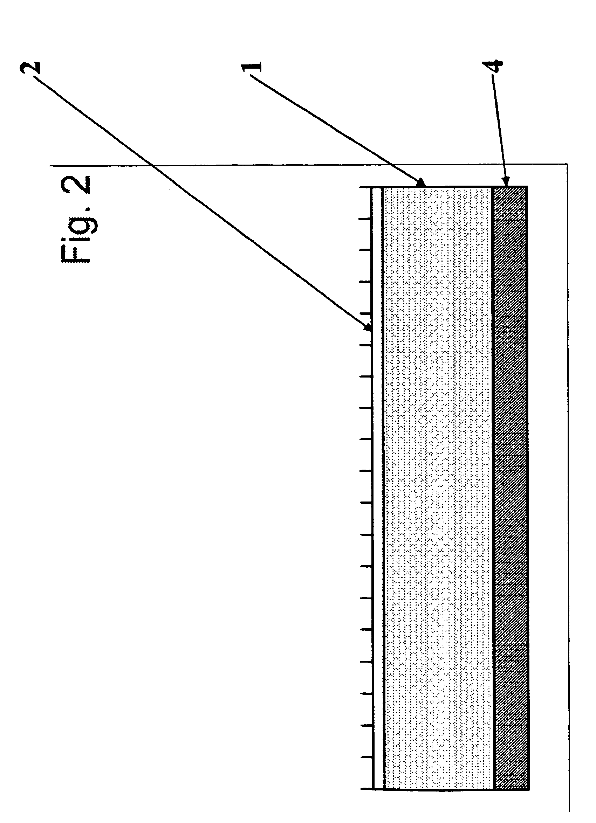

- Fig. 2: einen Querschnitt eines aufwickelbaren Fliesenaufbaus mit Verbindung zum Untergrund gemäß einem bevorzugten Ausführungsbeispiel der vor- liegenden Erfindung welcher, von der Außenoberfläche nach Innen zum Untergrund hin, folgenden Aufbau besitzt:
- Oberflächenschicht (2) aus ausgehärteten organischen Polysilazanen
- erste Trägerschicht (1)
- Dekorschicht (4)
- Fig. 3: einen Querschnitt eines aufwickelbaren Fliesenaufbaus mit Verbindung zum Untergrund gemäß einem bevorzugten Ausführungsbeispiel der vor- liegenden Erfindung welcher, von der Außenoberfläche nach Innen zum Untergrund hin, folgenden Aufbau besitzt:
- Oberflächenschicht (2) aus ausgehärteten organischen Polysilazanen
- erste Trägerschicht (1)
- Dekorschicht (4)
- zweite Trägerschicht (5)

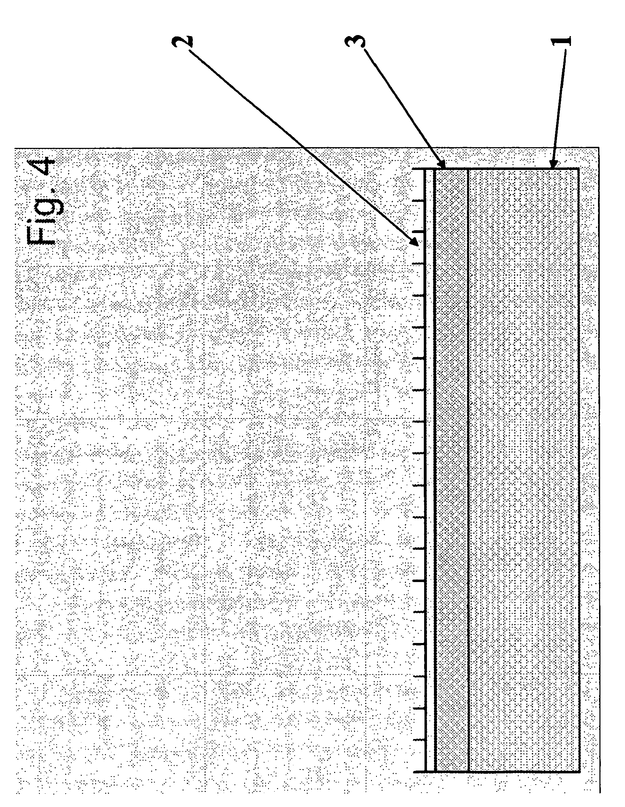

- Fig. 4: einen Querschnitt eines aufwickelbaren Fliesenaufbaus mit Verbindung zum Untergrund gemäß einem bevorzugten Ausführungsbeispiel der vor- liegenden Erfindung welcher, von der Außenoberfläche nach Innen zum Untergrund hin, folgenden Aufbau besittz:
- Oberflächenschicht (2) aus ausgehärteten organischen Polysilazanen
- Nanokeramikschicht (3)
- erste Trägerschicht (1)

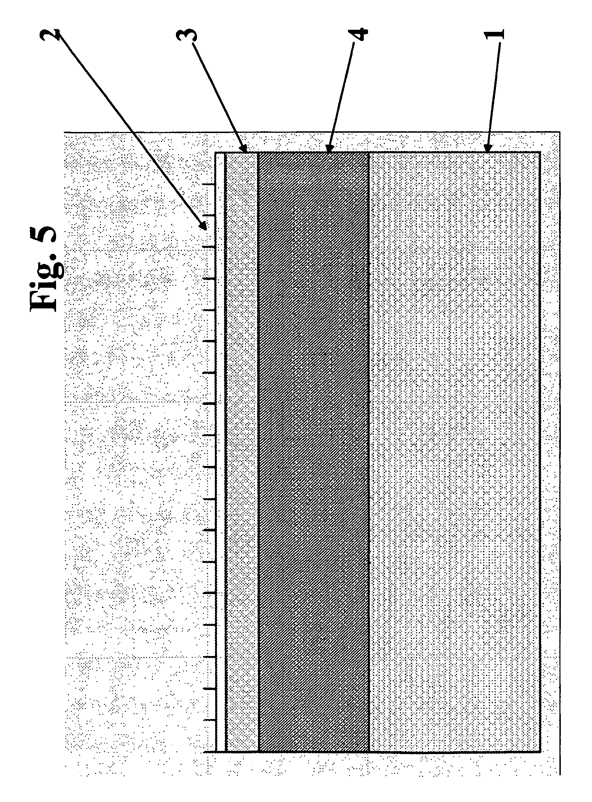

- Fig. 5: einen Querschnitt eines aufwickelbaren Fliesenaufbaus mit Verbindung zum Untergrund gemäß einem bevorzugten Ausführungsbeispiel der vor- liegenden Erfindung welcher, von der Außenoberfläche nach Innen zum Untergrund hin, folgenden Aufbau besitzt:
- Oberflächenschicht (2) aus ausgehärteten organischen Polysilazanen
- Nanokeramikschicht (3)
- Dekorschicht (4)
- erste Trägerschicht (1)
- Fig. 6: einen Querschnitt eines aufwickelbaren Fliesenaufbaus mit Verbin- dung zum Untergrund gemäß einem bevorzugten Ausführungsbeispiel der vorliegenden Erfindung welcher, von der Außenoberfläche nach Innen zum Untergrund hin, folgenden Aufbau besitzt:
- Oberflächenschicht (2) ausausgehärteten organischen Polysilaza- nen (Versiegelung)
- als "Topcoat" bezeichnete SiOx-Schicht, die der Nanokeramik- schicht (3) entspricht
- erste Trägerschicht aus Polycarbonat (Trägerschicht (1))
- Dekorschicht (4)
- zweite Trägerschicht aus Aluminium oder einem Vlies (Träger- schicht (5))
- Kleber (6) zur Verbindung mit dem Untergrund (7)
- Untergrund (7)

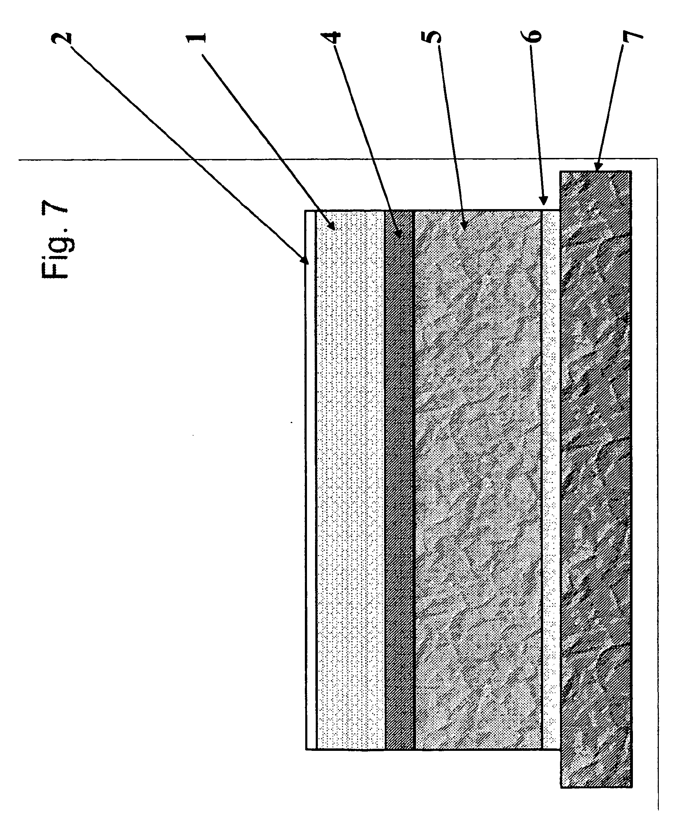

- Fig. 7: einen Querschnitt eines aufwickelbaren Fliesenaufbaus mit Verbin- dung zum Untergrund gemäß einem weiteren bevorzugten Ausfüh- rungsbeispiel der vorliegenden Erfindung, welcher, von der Außen- oberfläche nach Innen zum Untergrund hin, folgenden Aufbau besitzt:
- Oberflächenschicht (2) aus organischem Polysilazan (Versiege- lung)
- erste Trägerschicht aus Polycarbonat (Trägerschicht (1))
- Dekorschicht (4)
- zweite Trägerschicht aus Vlies (Trägerschicht (5))
- Kleber (6) zur Verbindung mit dem Untergrund (7)
- Untergrund (7)

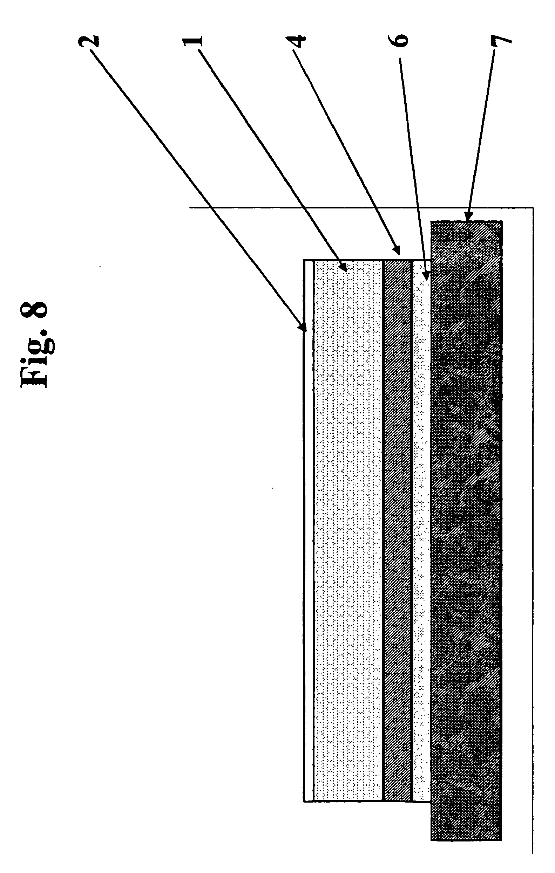

- Fig. 8: einen Querschnitt eines aufwickelbaren Fliesenaufbaus mit Verbin- dung zum Untergrund gemäß einem weiteren bevorzugten Ausfüh- rungsbeispiel der vorliegenden Erfindung, welcher, von der Außen- oberfläche nach Innen zum Untergrund hin, folgenden Aufbau besitzt:
- Oberflächenschicht (2) aus organischem Polysilazan
- Trägerschicht (1) aus Polycarbonat
- Dekorschicht (4)
- Kleber (6) als Verbindung zum Untergrund (7)
- Untergrund (7)

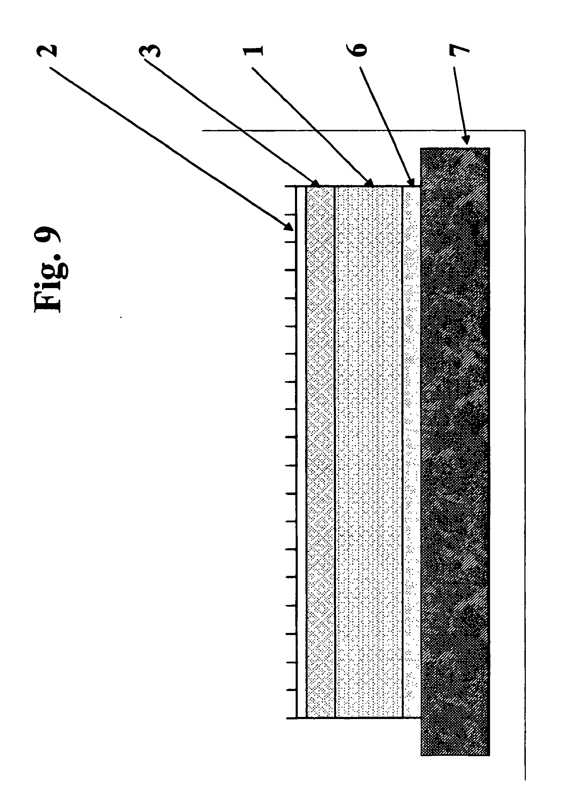

- Fig. 9: einen Querschnitt eines aufwickelbaren Fliesenaufbaus mit Verbin- dung zum Untergrund gemäß einem weiteren bevorzugten Ausfüh- rungsbeispiel der vorliegenden Erfindung, welcher, von der Außen- oberfläche nach Innen zum Untergrund hin, folgenden Aufbau und schalldämmende Eigenschaften besitzt:
- Oberflächenschicht (2) mit organischem Polysilazan-Netzwerk
- Nanokeramikschicht (3) aus SiOx
- Trägerschicht (1) aus flexiblem Polyolefin (Sarnafil^{®})

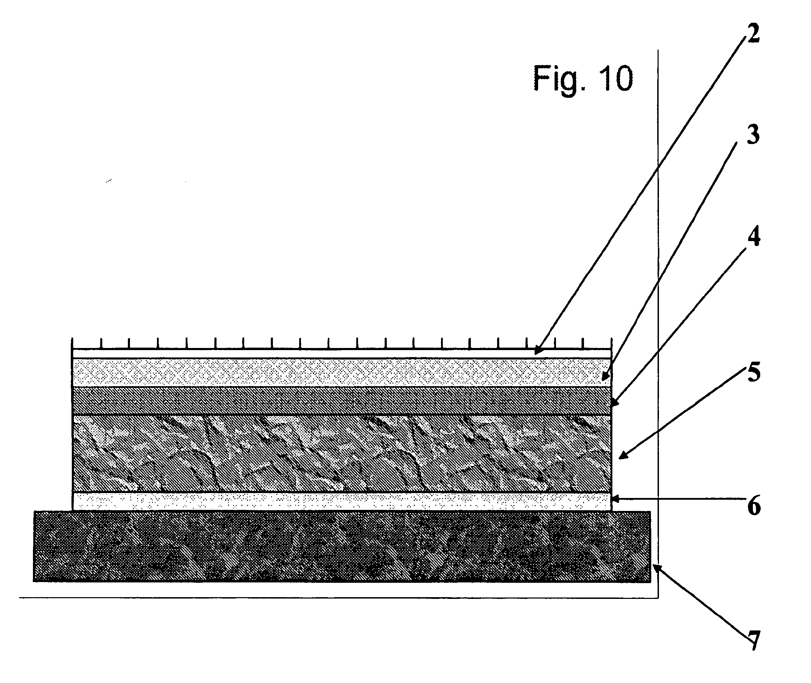

- Fig. 10: einen Querschnitt eines aufwickelbaren Fliesenaufbaus mit Verbin- dung zum Untergrund gemäß einem weiteren bevorzugten Ausfüh- rungsbeispiel der vorliegenden Erfindung, welcher, von der Außen- oberfläche nach Innen zum Untergrund hin, folgenden Aufbau und ein metallisches Erscheinungsbild besitzt:
- Oberflächenbeschichtungsschicht (2) mit einem Polysilazan- Netzwerk
- Nanokeramikschicht (3) aus SiOx
- Dekorschicht (4)
- Trägerschicht (5) aus Aluminium
- Kleber (6) zur Verbindung mit dem Untergrund (7)
- Untergrund (7)

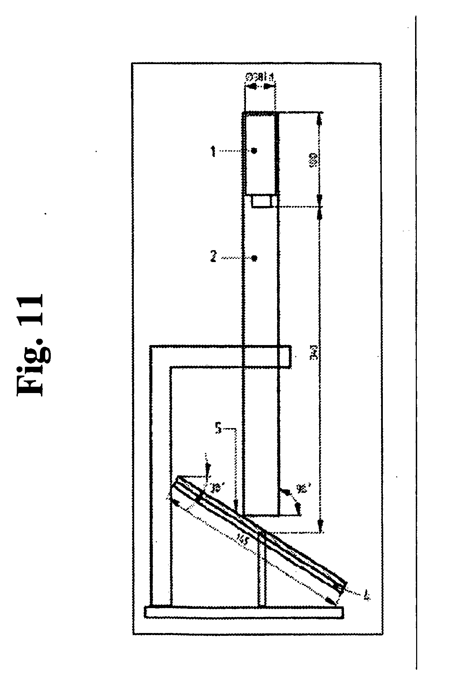

- Fig. 11: Vorrichtung zum Test auf Stossfestigkeit

Nachfolgend wird die Erfindung unter Bezugnahme auf diese Figuren näher erläutert. Gleiche Bezugszeichen in den Figuren beschreiben gleiche oder funktionsgleiche Schichten, soweit nichts Gegenteiliges beschrieben ist.

Gegenstand der vorliegenden Erfindung ist somit die Bereitstellung eines aufwickelbaren Fliesenaufbaus, d.h. eines Fliesenverbundmaterials, wobei der Aufbau des Fliesenverbundmaterials mehrschichtig ist.

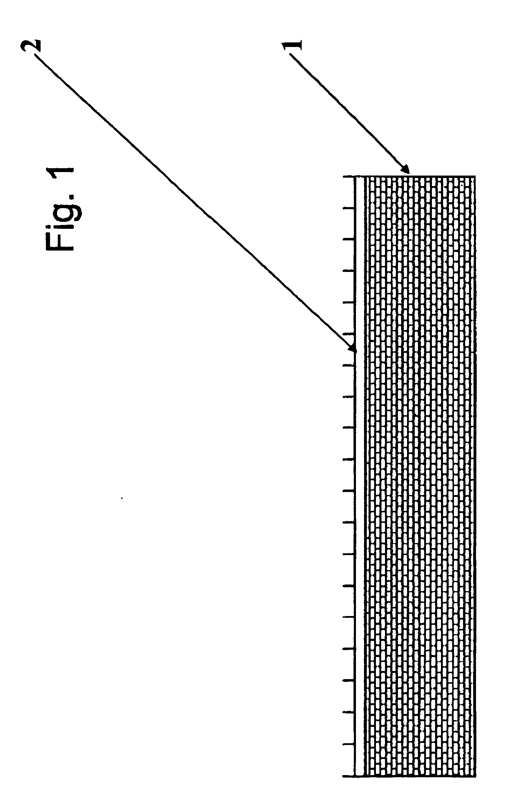

In einer ersten Ausführungsform der Erfindung wird ein aufwickelbarer Fliesenaufbau bereitgestellt, der Grundlage für alle weiteren erfindungsgemäßen Fliesenaufbauten ist. Der Fliesenaufbau gemäß dem ersten bevorzugten Ausführungsbeispiel nach Fig. 1 umfasst hierbei eine Trägerschicht 1 und eine Oberflächenschicht 2. Sowohl die Trägerschicht 1 als auch die Oberflächenschicht (2) sind flexibel und damit aufwickelbar, und auch durch die Verbindung beider Schichten ergibt sich ein flexibler und aufwickelbarer Aufbau. Der Ausdruck "flexibel und aufwickelbar" bedeutet vorliegend, dass der Fliesenaulbau nicht starr, sondern sowohl in Längs- als auch in Querrichtung biegsam und auf einer Rolle oder Trommel aufwickelbar ausgestaltet ist. Hierdurch ist es möglich, den erfindungsgemäßen Fliesenaufbau in aufgewickelter Form benutzerfreundlich bereitzustellen. In der vorliegenden Anmeldung werden die Ausdrücke "aufwickelbar" und "aufrollbar" als Synonyme und damit miteinander austauschbar verwendet.

Die Radien für das Ausliefern der erfindungsgemäßen rollbaren, d.h. aufwickelbaren Fliesen betragen 5-50 cm, insbesondere 10-30 cm, besonders bevorzugt 15-25 cm. Beim Verlegen sind engste Radien von mindestens 2 cm, insbesondere 3 cm, besonders bevorzugt 5 cm möglich. Bevorzugt sind die einzelnen Schichten des Fliesenverbundmaterials flexibler und mit einem kleineren Radius aufrollbar als der Gesamtverbund, der die rollbare Fliese bildet. Der erfindungsgemäße Fliesenaufbau wird in seiner Gesamtheit auch als "rollbare bzw. aufwickelbare Fliese" bezeichnet.

Damit wird es durch den erfindungsgemäßen Fliesenaufbau ermöglicht, eine Fliese mit geringem Gewicht und leichter und damit schneller Verarbeitbarkeit anzubieten. Anstelle des Aufbringens relativ schwerer, kleinflächiger und starrer Keramikfliesen besitzt der erfindungsgemäße rollbare Fliesenaufbau ein deutlich geringeres Gewicht als die Keramikfliesen des Standes der Technik, und er kann durch seine Aufrollbarkeit einerseits und die deutlich größere Breiten und Längen andererseits, die durch das geringe Gewicht und die Aufrollbarkeit ermöglicht werden, wesentlich einfacher, schneller und damit kostengünstiger auf den Untergrund aufgebracht werden.

Bei der Trägerschicht 1 handelt es sich um ein rollbares, d.h. aufwickelbares Material, welches aus einem Polymer, einer Keramik, einem Metall, aus Glas oder aus Cellulose oder aus Verbundwerkstoffen dieser Materialien oder aus Verbundwerkstoffen mit diesen Materialien zusammen mit anderen Materialien bestehen kann oder welches diese Materialien enthält. Wichtig ist, dass die Trägerschicht flexibel und rollbar ist und dass auf diese Trägerschicht eine Oberflächenschicht 2 aufbringbar ist. Die Oberflächenschicht 2 kann entweder direkt auf die Trägerschicht 1 oder über Zwischenschichten mit der Trägerschicht verbunden werden.

Falls die Trägerschicht 1 aus einem Metall besteht oder ein metallhaltiges Material enthält, werden als Metalle bevorzugt Aluminium, wie Aluminiumfolie oder -dünnband, Kupfer, Chrom, Nickel, Zink, Titan, Vanadium, Magnesium, Eisen und/oder Stahl eingesetz. Weiterhin einsetzbar sind chemische Verbindungen und Legierungen aus oder mit diesen Metallen sowie Kombinationen dieser Metalle. Besonders bevorzugt werden Trägerschichten aus Aluminium eingesetzt, um ein metallisches Aussehen der Oberfläche zu erhalten. Die Dicke der metallischen Schicht beträgt z.B. ca. 20 - 500 µm, bevorzugt ca. 100 - 150 µm.

Die Trägerschicht 1 kann auch aus einem Polymermaterial bestehen. Alle flexiblen und aufrollbaren Polymermaterialien oder Verbundstoffe mit Polymermaterialien können eingesetzt werden. Besonders bevorzugt werden Trägermaterialien aus Polycarbonat, Polymethylmethacrylat, Polyetherketon, Polyamid, Polyethylenterephthalat, Polyvinylchlorid, Polyolefinen, Polyethylen, Polypropylen, orientiertes Polypropylen, Polyester und Polystyrol. Bei den Polyolefinen werden insbesondere Materialien mit oder aus flexiblen Polyolefinen eingesetzt. Diese Materialien sind auch als thermoplastisches Polyolefin oder flexibles Polyolefin Alloy bekannt. Grundlage derartiger flexibler Polyolefine sind Polyethylen- und Polypropylen-Materialien. Diese Materialien werden kommerziell angeboten, beispielsweise von der Firma Sika, Schweiz, z.B. unter den Markennamen Sikaplan^{®} und Sarnafil^{®}. Vorteile dieser Materialien sind ihre hohe Flexibilität sowie ihre Abdichtungseigenschaften gegenüber Flüssigkeiten und Gasen, ihre hohe chemische Resistenz, ihre Langlebigkeit sowie ihre thermische und mechanische Beanspruchbarkeit.

Weiterhin besonders bevorzugt werden als polymere Trägerschichtmaterialien Polycarbonate eingesetzt. Polycarbonate sind Polymere aus der Familie der Polyester, die zum Stand der Technik gehören, und unter verschiedenen Handelsnamen angeboten werden. Derartige Polycarbonatträgermaterialien werden in Form von Polycarbonatfolien beispielsweise von Bayer MaterialScience unter den Markennamen Makrofol®, Bayfol® oder Marnoth® angeboten. Selbstverständlich können auch andere an sich bekannte Polycarbonatfolien aus verschiedenen Polycarbonatmaterialien und ihren Mischungen eingesetzt werden. In einer Ausgestaltungsform der Erfindung werden solche Polycarbonate verwendet, die hochtransparent sind. Es ist aber möglich, eingefärbte Polycarbonate oder matte oder semitransparente Polycarbonate einzusetzen. Diese Variationsmöglichkeiten stellen einen nicht zu unterschätzenden Vorteil des erfindungsgemäßen Fliesenaufbaus dar.

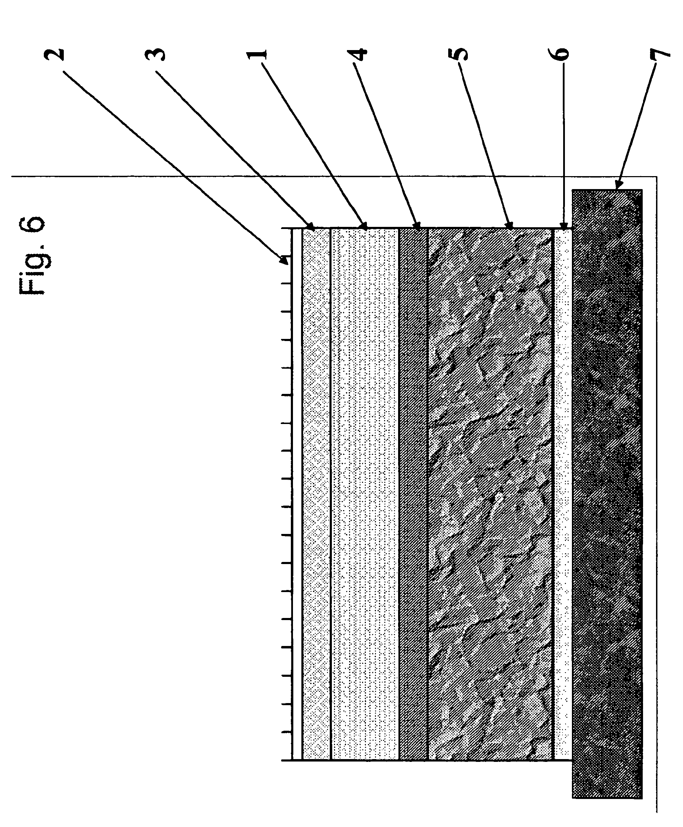

Das Trägermaterial kann wahlweise mit einem Vlies 5, wie dies z.B. die Fig. 6 und 7 zeigen, hinterlegt und verstärkt werden, welches die Unebenheiten im Untergrund, auf welchem der Fliesenaufbau aufgebracht wird, egalisiert und ein einfacheres Anbringen des Klebers und ein besseres Anhaften auf dem Untergrund ermöglicht. Zwischen die Trägerschichten 1 und 5 können ein oder mehrere weitere Schichten, z.B. eine Dekorschicht 4, angeordnet werden. Vliesmaterialien sind textile Flächengebilde aus einzelnen Fasern. Alternativ zu Vliesmaterialien können auch Gewebe und Folien eingesetzt werden. Vliesmaterialien sind alle an sich bekannten Vliesstoffe, also beispielsweise auch solche tierischen oder pflanzlichen Ursprungs. Besonders bevorzugt werden aber Fasermaterialien aus chemischen Fasern wie Polypropylen, Polyethylen, Polyvinylchlorid, Polyester wie Polyethylenterephthalat. Beispiele für mineralische Fasermaterialien sind solche aus Glas, aus Mineralwolle und Basalt. Besonders bevorzugt werden Vliesstoffe eingesetzt, die schalldämmende und/oder wärmedämmende Eigenschaften aufweisen, die aus brandhemmenden Materialien bestehen oder brandhemmende Zusätze enthalten und die eine gute Verbindung zum Untergrund gewährleisten. Die Verbindung der Vliesmaterialien mit den Trägermaterialien kann durch an sich bekannte Methoden wie zum Beispiel Trocken- oder Nasskaschieren oder durch Verpressen mit oder ohne Klebstoff erfolgen.

Die Dicke des Trägermaterials ist grundsätzlich unkritisch. Bevorzugt wird ein Trägermaterial solcher Dicke gewählt, dass das Trägermaterial eine genügend hohe Steifigkeit bei gleichzeitiger Flexibilität und Rollbarkeit besitzt. Entscheidend ist, dass die Dicke so ausgelegt wird, dass der erfindungsgemäß bereitgestellte Fliesenaufbau, insbesondere der keramische Fliesenaufbau ebenfalls rollbar bleibt. Die Trägerschichten, die aus den Trägermaterialien gebildet werden, weisen bevorzugt jeweils eine Dicke im Bereich von 100 bis 200 µm, z.B. 120 - 170 µm auf; die Gesamtdicke des Fliesenaufbaus liegt in einem Bereich von 300 - 1000 µm, bevorzugt 400 - 600 µm oder 300 - 500 µm. Erfindungsgemäß kann der Fliesenaufbau verschiedene Trägerschichten enthalten, die aus dein gleichen oder aus verschiedenen Materialien bestehen können. Je nach Einsatzgebiet können beispielsweise eine Trägerschicht 1 aus Polycarbonat mit einer Trägerschicht 5 aus Aluminium kombiniert werden, die wahlweise direkt oder über eine Zwischenschicht 3, die eine Nanokeramikschicht sein kann, miteinander verbunden sind. Der Fliesenverbund kann aber auch eine 3. Trägerschicht enthalten, wobei die Anzahl der Schichten begrenzt wird durch das Erfordernis der Rollbarkeit des gesamten Fliesenaufbaus. Die hierfür einzuhaltenden Radien wurden obenstehend beschrieben. Die nach innen zum Untergrund weisende Trägerschicht kann bevorzugt, wie oben ausgeführt, mit einem Vliesmaterial hinterlegt werden, die dann die zweite oder dritte Trägerschicht bildet.

Auf der Oberseite des Trägermaterials kann eine Dekor- oder Designschicht 4 aufgebracht werden. Handelt es sich um ein transparentes oder semi-transpartentes Trägermaterial wie ein Trägermaterial aus Polycarbonat, kann die Dekorschicht auch auf der Unterseite des Trägermaterials aufgebracht werden. Das Aufbringen der Dekorschicht auf das Trägermaterial kann durch an sich bekannte Verfahren erfolgen. Beispiele hierfür sind Druckverfahren wie Flexodruck oder Digitaldruck. Optional kann bei einem transparenten Trägermaterial die Dekorschicht auch Teil des zur Verstärkung des Trägermaterials benutzten hinterlegten Vlieses sein, oder, falls kein Vlies verwendet wird, das Trägermaterial mit der Dekorschicht hinterlegt sein. Die Dekorschicht kann als einzelne Lage hergestellt und mit dem Trägermaterial bzw. den Trägermaterialien verbunden werden mit den üblichen Terminierungsverfahren, beispielsweise durch Klebstoffe oder durch Adhäsionskräfte. Alternativ kann das Trägermaterial mit der Dekorschicht bedruckt werden.

Die Trägermaterialien können auch direkt miteinander verbunden werden, d.h. die erste Trägerschicht mit der zweiten Trägerschicht bzw. die zweite Trägerschicht mit der dritten Trägerschicht. Beispiel hierfür sind die Verbindung eines Aluminiumträgers als zweite Trägerschicht mit einem Vliesmaterial als dritte Trägerschicht. Je nach gewünschter Materialeigenschaft und nach Anwendungsgebiet kann der Fachmann die Trägermaterialien miteinander kombinieren, um mit dieser Vielfalt an Variationsmöglichkeiten die gewünschten Eigenschaften des Endprodukts zu enthalten.

Die erfindungsgemäßen Fliesenaufbauten sind durch die Materialeigenschaften, die sich aus der Summe der Eigenschaften der verwendeten Trägerschichten und der Oberflächenbeschichtung ergeben, gekennzeichnet.

Eine besondere Schwierigkeit beim Auffinden der Problemlösungen der vorliegenden Erfindung lag darin, einen Fliesenaufbau bereitzustellen, welcher die an sich bekannten Gebrauchseigenschaften keramischer Fliesen besitzt und zusätzlich die Kriterien der Flexibilität, eines deutlich geringeren Gewichts im Vergleich zu keramischen Fliesen und eine leichtere Verarbeitbarkeit erfüllt. Zu den Eigenschaften keramischer Fliesen gehören ein begrenztes Wasseraufnahmevermögen, um die Fliesen und den Untergrund gegen Feuchtigkeit und auch gegen Frost beständig zu machen, eine hohe Abriebfestigkeit, Resistenz gegen Zerkratzen, gegen Einwirkung durch Chemikalien wie Säuren und Laugen, insbesondere gegen Chemikalien, wie sie in handelsüblichen Reinigungsmitteln eingesetzt werden, eine gute Reinigungsfähigkeit, um hygienischen Anforderungen gerecht zu werden, eine Resistenz gegen Zerkratzen sowie eine Langzeitstabilität.

Überraschenderweise wurde gefunden, dass durch das Aufbringen einer organischen Polysilazan-Schicht auf die Oberfläche des Verbundmaterials ein Fliesenaufbau erhältlich ist, welcher den oben genannten Kriterien einschließlich der Rollbarkeit bzw. Aufwickelbarkeit und der Flexibilität genügt.

Polysilazane sind an sich bekannt. Hierbei handelt es sich um Polymere der nachfolgenden allgemeinen Strukturformel (1), deren Polymerketten abwechselnd aus Silizium- und Stickstoff-Atomen aufgebaut sind.

-(SiR'R"-NR"')n- (1)

wobei R', R", R"' unabhängig voneinander für Wasserstoff oder einen gegebenenfalls substituierten Alkyl-, Aryl-, Vinyl oder (Trialkoxysilyl)alkyl-Rest stehen, mit der Maßgabe, dass nicht alle Reste R', R" und R"' gleichzeitig für Wasserstoff stehen, wobei es sich bei n um eine ganze Zahl handelt und n so bemessen ist, dass das Polysilazan ein zahlenmittleres Molekulargewicht von 150 bis 150.000 g/mol aufweist.

Die erfindungsgemäß einsetzbaren organischen Polysilazane zur Beschichtung des aufwickelbaren Trägerverbundmaterials umfassen bevorzugt eine Lösung eines organischen Polysilazans oder eine Mischung von organischen Polysilazanen der allgemeinen Formel (2),

-(SiR'R"-NR"')n-(SiR*R**-NR***)p- (2)

wobei
- R', R"' und R*** für Wasserstoff und R", R* und R** für Methyl stehen;
- R', R"' und R*** für Wasserstoff und R", R* für Methyl und R** für Vinyl stehen;
- R', R"', R* und R*** für Wasserstoff und R" und R** für Methyl stehen.

n und p sind so bemessen, dass das organische Polysilazan ein zahlenmittleres Molekulargewicht von 150 bis 150.000 g/mol aufweist.

Bevorzugt werden Polysilazane der Formel (3) eingesetzt

-(SiR'R"-NR"')n-(SiR*R**-NR***)p-(SiR1R2-NR3)q- (3)

wobei
R', R'" und R*** für Wasserstoff und R", R*, R** und R2 für Methyl, R3 für (Triethoxysilyl)propyl und R1 für Methyl oder Wasserstoff stehen.
n, p und q sind so bemessen, dass das Polysilazan ein zahlenmittleres Molekulargewicht von 150 bis 150.000 g/mol aufweist.

Im Allgemeinen beträgt der Anteil an Polysilazan im Lösemittel 1 bis 80 Gew.-% Polysilazans, bevorzugt 5 bis 50 Gew.-%, besonders bevorzugt 10 bis 40 Gew.-% enthält.

Aufgrund des organischen Anteils in der Polysilazanstruktur und des reduzierten Si-H Gehaltes im Bindemittel werden flexible Strukturen erhalten. Diese Systeme eignen sich insbesondere zum Beschichten der rollbaren Trägermaterialien (1) oder flexible Nanokeramikschichten (2), da sie über einen höheren thermischen Ausdehnungskoeffizienten verfügen.

Als Lösemittel für die Polysilazanformulierung eignen sich besonders organische Lösemittel, die kein Wasser sowie keine reaktiven Gruppen (wie Hydroxyl- oder Amingruppen) enthalten. Dabei handelt es sich beispielsweise um aliphatische oder aromatische Kohlenwasserstoffe, Halogenkohlenwasserstoffe, Ester wie Ethylacetat oder Butylacetat, Ketone wie Aceton oder Methylethylketon, Ether wie Tetrahydrofuran oder Dibutylether, sowie Mono- und Polyalkylenglykoldialkylether (Glymes) oder Mischungen aus diesen Lösemitteln.

Zusätzlicher Bestandteil der Polysilazanformulierung können weitere Bindemittel sein, wie sie üblicherweise zur Herstellung von Lacken verwendet werden. Dabei kann es sich beispielsweise um Celluloseether und -ester, wie Ethylcellulose, Nitrocellulose, Celluloseacetat oder Celluloseacetobutyrat, natürliche Harze wie Kautschuk oder Kolophoniumharze oder Kunstharze, wie Polymerisationsharze oder Kondensationsharze, beispielsweise Aminoplaste, insbesondere Harnstoff- und Melaminformaldehydharze, Alkydharze, Acrylharze, Polyester oder modifizierte Polyester, Epoxide, Polyisocyanate bzw. blockierte Polyisocyanate oder Polysiloxane handeln.

Weitere Bestandteile der Polysilazanformulierung können Additive, die z.B. Viskosität der Formulierung, Untergrundbenetzung, Filmbildung, Gleitwirkung oder das Ablüftverhalten beeinflussen, die nachfolgend näher beschrieben werden.

Zusätzlicher Bestandteil der Polysilazanformulierung können Katalysatoren wie beispielsweise organische Amine, Säuren sowie Metalle oder Metallsalze oder Gemische dieser Verbindungen sein.

Katalysatoren werden vorzugsweise in Mengen von 0,001 bis 10 %, insbesondere 0,01 bis 6 %, besonders bevorzugt 0,1 bis 3 %, bezogen auf das Gewicht des Polysilazans, eingesetzt.

Beispiele für Aminkatalysatoren sind Ammoniak, Methylamin, Dimethylamin, Trimethylamin, Ethylamin, Diethylamin, Triethylamin, n-Propylamin, Isopropylamin, Din-propylamin, Di-isopropylamin, Tri-n-propylamin, n-Butylamin, Isobutylamin, Di-n-butylamin, Di-isobutylamin, Tri-n-butylamin, n-Pentylamin, Di-n-pentylamin, Tri-n-pentylamin, Dicyclohexylamin, Anilin, 2,4-Dimethylpyridin, 4,4-Trimethylenbis-(1-methylpiperidin), 1,4-diazabicyclo[2.2.2]octan, N,N-Dimethylpiperazin, cis-2,6-Dimethylpiperazin, trans- 2,5-Dimethylpiperazin, 4,4-Methylenbis(cyclohexylamin), Stearylamin, 1,3-di-(4-Piperidyl)propan, N,N-Dimethylpropanolamin, N,N Dimethylhexanolamin, N,N-Dimethyloctanolamin, N,N-Diethylethanolamin, 1-Piperidinethanol, 4-Piperidinol.

Beispiele für organische Säuren sind Essigsäure, Propionsäure, Buttersäure, Valeriansäure, Capronsäure.

Beispiele für Metalle und Metallverbindungen als Katalysatoren sind Palladium, Palladiumacetat, Palladiumacetylacetonat, Palladiumpropionat, Nickel, Nickelacetylacetonat, Silberpulver, Silberacetylacetonat, Platin, Platinacelylacetonat, Ruthenium, Rutheniumacetylacetonat, Rutheniumcarbonyle, Gold, Kupfer, Kupferacetylacetonat, Aluminiumacetylacetonat, Aluminiumtris(ethylacetoacetat).

Je nach verwendetem Katalysatorsystem kann die Gegenwart von Feuchtigkeit oder von Sauerstoff eine Rolle bei der Aushärtung der Beschichtung spielen. So kann durch Wahl eines geeigneten Katalysatorsystems die schnelle Härtung bei hoher oder niedriger Luftfeuchtigkeit bzw. bei hohem oder niederem Sauerstoffgehalt erreicht werden. Dem Fachmann sind diese Einflüsse bekannt und er wird durch geeignete Optimierungsmethoden die atmosphärischen Bedingungen entsprechend einstellen.

Die erfindungsgemäß eingesetzten Polysilazanformulierungen können auf alle bei der vorliegenden Erfindung zur Verwendung gelangenden aufwickelbaren Trägermaterialien und flexiblen Nanokeramikschichten appliziert werden. Der Polysilazanlack kann direkt sowohl auf das aufwickelbare Trägermaterial als auch auf die flexible Nanokeramikschicht appliziert werden. Aufgrund der glättenden Eigenschaften und der günstigen Oberflächenpolarität wird jeweils eine hochglänzende, leicht zu reinigende Oberfläche erzielt.

Die Beschichtung mit der Polysilazanformulierung kann durch Verfahren erfolgen, wie sie üblicherweise in der Lackierung angewendet werden. Dabei kann es sich beispielsweise um Sprühen, Tauchen oder Fluten handeln. Anschließend kann eine thermische Nachbehandlung erfolgen, um die Aushärtung der Beschichtung zu beschleunigen. Je nach verwendeter Polysilazanformulierung und Katalysator erfolgt die Aushärtung bereits bei Raumtemperatur, kann aber durch Erhitzen beschleunigt werden. So ist es möglich, die Polysilazanschicht bei ca. 120°C innerhalb von ca. 120 Min. auszuhärten, so dass sich eine Polysilazanglasur ergibt.

Zusätzlich erhöht sich nach dem Aufbringen der Beschichtung der Glanzgrad gegenüber dem unbeschichteten Material.

Somit ist es möglich, eine Schutzschicht zu erzeugen, die eine deutlich geringere Dicke als die herkömmlichen Glasuren aufweist, verbunden mit einem geringeren Verbrauch an Material und weniger Emission an Lösemitteln, die zusätzlich überlegene Eigenschaften als die herkömmlichen Glasuren aufweist. Somit besitzt die Polysilazanbeschichtung erhebliche ökonomische und ökologische Vorteile.

Grundsätzlich erfolgt die Härtung der Beschichtung aufgrund der hohen Reaktivität des Polysilazans bereits bei Raumtemperatur und darunter, kann aber durch Temperaturerhöhung beschleunigt werden. Bevorzugt wird die Beschichtung bei einer Temperatur im Bereich von 10 bis 120°C, vorzugsweise 80 bis 100°C gehärtet. Die maximal mögliche Temperatur zur Härtung hängt vom aufwickelbaren Trägermaterial 1 ab, auf das die Beschichtung aufgebracht wird. Im Falle von Metallen, wie beispielsweise Aluminium, können dies höhere Temperaturen von 180 bis 200°C oder höher sein. Wird die Beschichtung auf ein Polymer als aufwickelbares Trägermaterial aufgebracht, empfiehlt es sich bei niedrigerer Temperatur zu arbeiten, so dass es nicht zur Erweichung des Polymers kommt, bevorzugt bei 25 bis 120°C, besonders bevorzugt bei 80 bis 100°C. Lässt das aufwickelbare Trägermaterial ein Arbeiten bei 160 - 170°C zu, so erfolgt eine Aushärtung innerhalb von 15-30 Min.

Des Weiteren hat die Luftfeuchtigkeit einen Einfluss auf die Aushärtung der Beschichtung. Bei höherer Luftfeuchtigkeit findet eine schnellere Aushärtung statt, was von Vorteil sein kann; umgekehrt bringt die Aushärtung in einer Atmosphäre mit nur wenig Luftfeuchtigkeit, beispielsweise in einem Trockenschrank, einen langsamen und gleichmäßigen Härtungsprozess. Daher kann die Aushärtung der erfindungsgemäßen Beschichtung bei einer relativen Luftfeuchtigkeit von 0 bis 100 % erfolgen.

Die flexible Polysilazanbeschichtung 2 weist eine Dicke von mindestens 1 prn, bevorzugt 2 bis 20 µm, besonders bevorzugt 3 bis 10 µm auf und gewährleistet einen hervorragenden Schutz der Oberflächen vor Korrosion und Verkratzung. Bei derartig beschichteten aufwickelbaren Trägermaterialien wird ein Einfressen von Verunreinigungen verhindert, da es sich um einen hochtemperaturfesten Toplack handelt. Die Reinigung wird aufgrund der glatten Oberfläche erheblich erleichtert.

Insoweit in der vorliegenden Beschreibung von "neuen keramischen Fliesen" gesprochen wird, handelt es sich um die erfindungsgemäßen Fliesenaufbauten, bei denen zumindest eine Schicht keramische Materialien enthält oder aus keramischen Materialien besteht. Beispielsweise verleiht die Verwendung einer Nanokeramikschicht, bevorzugt aus SiOₓ, dem erfindungsgemäßen Fliesenaufbau zusätzliche keramische Eigenschaften. Während der Fliesenaufbau in der Erfindung hierdurch in seiner Gesamtheit Eigenschaften erhält, die denen einer Keramikfliese vergleichbar sind, beispielsweise bezüglich Härte, Langzeitstabilität, Säurebeständigkeit usw., wird gleichzeitig die Flexibilität und damit Aufwickelbarkeit des Fliesenaufbaus beibehalten. Der Ausdruck "keramischer Fliesenaufbau" ist insbesondere darauf zurückzuführen, dass die organische Polysilazanbeschichtung der Oberflächenschicht aushärtet, welche alle Oberflächeneigenschaften aufweist, die eine Keramikfliese gemäß dem Stand der Technik besitzt, gleichzeitig aber die Aufwickelbarkeit des gesamten Fliesenaufbaus nicht nachteilig beeinflusst. Nach Aushärtung der organischen Polysilazane ergibt sich eine Polysiloxanstruktur mit einer höher vernetzen Polysilazanstruktur. Der Anteil an höher vernetzter Polysilazanstruktur nimmt zum Substrat hin zu.

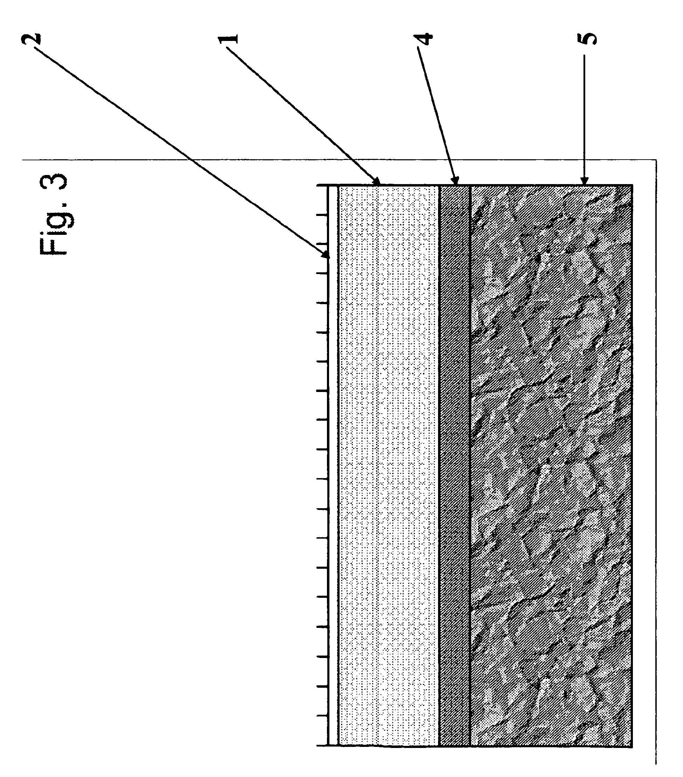

Der erfindungsgemäß bereitgestellte aufwickelbare Fliesenaufbau besteht in der einfachsten Ausgestaltung gemäß Anspruch 1 und Fig. 1 aus einer Trägerschicht 1 mit einer Oberflächenschicht 2, die ein ausgehärtetes organisches Polysilazan-Netzwerk aufweist. Durch weitere Schichten können die Eigenschaften des erfindungsgemäßen Fliesenaufbaus verändert und den Anforderungen des Kunden und des Untergrundes angepasst werden. Eine Vielzahl von Ausgestaltungen ist möglich, und nachfolgend werden einige besonders bevorzugte Fliesenaufbauten näher beschrieben. Figur 3 zeigt einen derartigen Aufbau mit einer zusätzlichen Dekorschicht.

In einer Ausgestaltungsform der Erfindung ist zwischen der Trägerschicht 1 und der Oberflächenschicht 2 eine Nanokeramikschicht 3 angeordnet, das heißt die Polysilazan-Versiegelungsschicht liegt auf der Nanokermamikschicht 3 auf, welche wiederum mit der Trägerschicht 1 verbunden ist. Ein Beispiel hierfür ist die Figur 3.

Bei der Nanokeramikschicht 3, welche selbstverständlich flexibel sein muss, um dem Gesamtaufbau Flexibilität und Rollbarkeit zu verleihen, handelt es sich besonders bevorzugt um Siliziumoxid(SiOx)-Beschichtungen, welche eine hohe Lichttransparenz mit hervorragenden Barriereeigenschaften gegenüber Gasen und Geruchsstoffen besitzen. Diese flexible Nanokeramikschicht 3 erhöht die Resistenz des Fliesenaufbaus gegen das Eindringen von Wassermolekülen, verbessert die Knickbruchbeständigkeit und ermöglicht eine hohe Haftung sowohl der Polysilazanbeschichtung als auch der darunter liegenden aufwickelbaren Trägermaterialien. Die Nanokeramikschicht 3 ist aufgrund ihrer Transparenz dazu geeignet, darunter liegende Dekorschichten für den Betrachter sichtbar zu machen. Derartige Nanokeramikschichten mit Barriereeigenschaften sind kommerziell unter der Marke CERAMIS® von der Firma Alcan Packaging erhältlich.

Die besonders bevorzugt als Nanokeramikschicht 3 eingesetzten SiOx-Schichten werden durch an sich bekannte Verfahren auf das Trägermaterial aufgebracht, beispielsweise durch Elektronenstrahl-Verdampfung von SiO₂ im Vakuum. Neben einer derartigen Vakuumbedampfung ist auch eine Plasmapolymerisation möglich. Auch in die Nanokeramikschicht 3 lassen sich wiederum funktionelle Komponenten einbringen, beispielsweise farbgebende Pigmente wie TiO₂ in einer Menge, die eine effektive Einfärbung bewirkt. Wie beim Trägermaterial 1 kann auch die Nanokeramikschicht 3 ein- oder mehrfarbig bedruckt werden, beispielsweise durch Flexodruck- oder Digitaldruckverfahren.... bitte beachten Sie, dass als Nanokeramikschicht ausschließlich SiOx-Schichten offenbart werden. Sollten Sie noch andere Nanokeramikschichten kennen, sind diese einzufügen.

Die Schichtdicke der flexiblen Nanokeramikschicht liegt vorzugsweise bei mindestens 1 µm, insbesondere zwischen 3 und 15 µm, besonders bevorzugt zwischen 5 und 10 µm. Selbstverständlich sind auch andere Barriereschichten wie solche aus Aluminium oder Aluminiumoxid, entweder anstelle von SiOₓ-Schichten oder in Kombination mit diesen, einsetzbar.

Bei Verwendung von SiOx-Nanokeramikschichten wird als Trägermaterial bevorzugt Polycarbonat oder ein flexibles Polyolefinmaterial eingesetzt. Flexible Polyolefinmaterialien sind z.B. von der Firma SIKA unter der Kennzeichnung Sarnafil® erhältlich. Polycarbonatträgermaterialien sind aufgrund ihrer guten optischen und mechanischen Eigenschaften bevorzugte Schichtmaterialien. Die hier als "Polycarbonat" bezeichneten Trägerschichten können aus Polycarbonaten, aus Polycarbonat-Blends und Mischungen aus Polycarbonaten mit anderen Polymeren bestehen. Derartige Polycarbonatträgermaterialien werden in Form von Polycarbonatfolien beispielsweise von Bayer MaterialScience unter den Markennamen Makrofol®, Bayfol® oder Mamoth® angeboten. Selbstverständlich können auch andere an sich bekannte Polycarbonatfolien aus verschiedenen Polycarbonatmaterialien und ihren Mischungen eingesetzt werden. Bevorzugt werden solche Polycarbonate verwendet, die hochtransparent sind.

In weiteren Ausgestaltungen der Erfindung können ein oder mehrere weitere Trägermaterialien eingesetzt werden, um die Eigenschaften der erfindungsgemäßen rollbaren bzw. aufwickelbaren keramischen Fliese weiter zu verbessern. Hierzu gehören Aluminiumträger oder Träger aus Vliesmaterialien (vgl. Fig. 6, 7 und 10) oder anderen Materialien. Je nach Kundenwunsch und je nach den Anforderungen an das Fliesenmaterial können durch die verschiedenartigen Kombinationsmöglichkeiten der Schichten die gewünschten Materialeigenschaften bereitgestellt werden. Voraussetzung hierfür ist allerdings immer, dass eine Oberflächenschicht aus einem organischen Polysilazan-Netzwerk in Verbindung zumindest mit einer flexiblen Trägerschicht eingesetzt wird. In einer weiteren Ausgestaltungsform der Erfindung wird eine erste Trägerschicht 1 aus Polycarbonat mit einer Oberflächenschicht 2 aus einem organischen Polysilazan beschichtet. Auf der der Oberflächenschicht 2 abgewandten Seite der ersten Trägerschicht 1 ist eine Nanokeramikschicht 3 vorgesehen, die als SiOₓ-Schicht ausgestaltet ist. Aufgrund der Transparenz sowohl des Polycarbonat-Trägermaterials als auch der Nanokeramikschicht 3 wird auf die dem Trägermaterial aus Polycarbonat abgewandten Seite der Nanokeramikschicht 3 eine Dekorschicht 4 aufgebracht. Optional kann die Dekorschicht mit einem weiteren Trägermaterial aus Aluminium hinterlegt werden, oder aber auch mit Vliesmaterial. Weiterhin alternativ kann das Trägermaterial aus Aluminium mit einem Vliesmaterial hinterlegt werden. Ein Beispiel hierfür ist in der Fig. 1 wiedergegeben.

Dekorative dreidimensionale Effekte können auch dadurch erzielt werden, dass vor dem Aufbringen der Polysilazan-Beschichtung der Fliesenaufbau bzw. Teile des Fliesenaufbaus wie einzelne Trägerschichten oder Kombinationen aus Trägerschichten, beispielsweise eine Kombination aus Nanokeramikschicht 3 und Trägerschicht 1 oder eine Kombination aus Trägerschicht 1 sowie Trägerschicht 5, wahlweise mit einer Nanokeramikschicht 3, durch einen Prägedruck strukturiert wird. Anschließend an die Strukturierung wird die Polysilazan-Oberflächenbeschichtung aufgebracht.

Die Herstellung der einzelnen Schichten sowie die Kombination der einzelnen Schichten zum aufwickelbaren Fliesenaufbauverbund erfolgt durch an sich bekannte Verfahren. So wird beispielsweise das rollbare Trägermaterial 1, z.B. aus Polycarbonat, in einer Hochvakuumanlage mit der flexiblen Nanokeramikschicht 3 auf der Vorderseite kombiniert. Wahlweise kann bei einem transparenten oder halbtransparenten rollbaren Trägermaterial auf der Rückseite des Trägers, bei undurchsichtigen rollbaren Trägermaterialien auf ihrer Vorderseite, eine Dekorschicht 4 mit Designelementen, beispielsweise durch Digitaldruckverfahren, Anodisieren, Siebdruck, Contradruck oder Lackieren aufgebracht werden. Anschließend wird über einen Rolle-zu-Rolle-Prozess die flexible Polysilazanbeschichtung aufgebracht und ausgehärtet. Unter einem Rolle-zu-Rolle-Prozess ist ein Verfahren zu verstehen, bei dem das Trägermaterial an einer Rolle abgerollt wird, in einem Durchlaufverfahren eine oder mehrere Schichten aufgebracht werden und das so erhaltene Zwischen- oder Endprodukt auf eine weitere Rolle aufgewickelt wird. Bei diesem Herstellungsverfahren liegt das Endprodukt bereits während des Fertigungsverfahrens in Form einer Rolle vor.

Das Trägermaterial 1 kann mit weiteren Trägermaterialien, beispielsweise einem Trägermaterial 5 aus Aluminium, verbunden werden. Hierdurch ergeben sich eine größere Stabilität und höhere Barriereeigenschaften.

Auf die erfindungsgemäße aufwickelbare Fliese kann noch ein Vliesmaterial auf der Unterseite angebracht werden, um die Verlegbarkeit zu verbessern, so dass sie auch auf qualitativ schlechten Untergründen gut verlegbar ist und Unebenheiten im Untergrund egalisiert werden können. Die Dicke der Vliesschicht beträgt ca. 100 - 1000 µm, bevorzugt ca. 300 - 500 µm.

An den Bauuntergrund werden keine besonderen Anforderungen gestellt. Die erfindungsgemäß rollbare bzw. aufwickelbare Fliese passt sich dem Untergrund an, insbesondere wenn ein Vlies auf der Unterseite vorgesehen ist.

Die Verklebung der erfindungsgemäßen Fliesen, d.h. des aufwickelbaren Fliesenaufbaus, erfolgt durch an sich bekannte handelsübliche Klebstoffe, insoweit sie mit den Fliesenmaterialien kompatibel sind.

Ein weiterer Vorteil der erfindungsgemäßen aufwickelbaren Fliesen liegt in der leichten Verarbeitbarkeit bzw. Verlegbarkeit. Zum einen sind die verwendeten Materialien so ausgelegt, dass der Fliesenaufbau im Vergleich zu den üblichen keramischen Fliesen ein geringes Gewicht aufweist, was die Verlegbarkeit auf beispielsweise Wänden deutlich vereinfacht. Da der erfingungsgemäße aufwickelbare Fliesenaufbau Stoß an Stoß verlegbar ist, werden Fugen und damit die üblicherweise bei keramischen Fliesen notwendige Verfugung überflüssig. In einer Ausgestaltungsform der Erfindung werden evtl. verbleibende Zwischenräume zwischen zwei Fliesenbahnen mit den erfindungsgemäß eingesetzten organischen Polysilazanen oder anderen Polysilazanmaterialien verfugt, d.h. miteinander verbunden und zum Untergrund hin abgedichtet.

Die Verbindung der einzelnen Schichten erfolgt in an sich bekannter Weise. So wird beispielsweise die Verbindung des Aluminiumträgers mit einem Vlies durch Thermolaminierung bei ca. 130°C durchgeführt; das Aufbringen der SiOx-Schicht erfolgt im Vakuum; das Aufbringen der Polysilazanschicht durch Besprühen oder Eintauchen.

Zusammenfassend besitzt der erfindungsgemäß bereitgestellte aufwickelbare bzw. rollbare Fliesenaufbau, insbesondere ein Fliesenaufbau mit Trägerschichten, mit keramischen Schichten, die nachfolgenden Eigenschaften:
- rollbar bzw. aufwickelbar
- wasserdicht
- dampfundurchlässig
- schlagfest
- knickbruchbeständig
- abwaschbar
- scheuerbeständig
- feuerfest
- frei von inneren Spannungen
- hydrophob bzw. hydrophil einstellbar
- leicht zu reinigen
- Schmutz abstossend
- säure- und laugenbeständig
- antibakteriell einstellbar
- selbstreinigend einstellbar
- frei von PVC, VOC and Formaldehyd
- frei von Schwermetallen, Stabilisatoren, Weichmachern
- vollständig Umweltverträglich
- praktisch fugenlos verlegbar
- ohne Nanorisiken
- auf verschiedenen Untergründen applizierbar
- mit verschiedenen Designs ausrüstbar

Nachfolgend wird die Erfindung anhand von Ausführungsbeispielen dargestellt. Es wurden die nachfolgenden Tests zur Bestimmung und zum Vergleich der Produkteigenschaften eingesetzt. Kratzfestigkeit: ermittelt nach EN 259-1. Auf dem Probekörper wurde 300 mal gescheuert. Begonnen wurde mit einem weichen Scheuermittel. Dann wurden nach und nach härtere Mittel verwendet, solange bis der Probenkörper eine sichtbare Veränderung der Oberfläche aufwies. Bevorzugt wurden weiche, mittlere und harte Schwämme der Marke Scotch-Brite®, weiche und harte Bürsten, Stahlwatte und Schleifpapier mit der Körnigkeit P240 verwendet. Die erfindungsgemässen Fliesenaufbauten sind hoch kratzfest und scheuerbeständig gemäss EN 259-1.

Säuren- und Fleckenneutralität: ermittelt nach EN 423. Dabei wurden bevorzugt Pipetten, Watterondellen, chemische Substanzen, Microfaserlappen, Bürsten und Scheuermittel für die Reinigung verwendet. Der Probenkörper wurde mit 1ml bis 2ml der chemischen Substanz beträufelt. Falls diese davon lief, wurde eine Watterondelle aufgelegt. Die Haupteinwirkungsdauer betrug 2h. Vor jeder Reinigung wurden die noch feuchten Flecken mit Baumwolle abgetupft, wobei vom Rand beginnend zur Fleckenmitte
hin gearbeitet wurde. Nach der Reinigung wurden die verbleibenden Flecken aus einer Entfernung von ungefähr 800mm unter einem Beobachtungswinkel von etwa 45° und bei langsamer Drehung des Beobachtungstisches von allen Richtungen aus betrachtet. Wenn ein Fleck sichtbar war, wurde dieser mit einem schwachen Schleifmittel oder einem Reinigungsmittel abgescheuert und erneut untersucht. Die empfindungsgemässen Fliesenaufbauten sind Säuren- und Fleckenneutral gemäss EN 423.

Stossfestigkeit: ermittelt nach EN 259-2. Bevorzugt wurde 1 Joule Energie unter einem Winkel von 30 Grad auf dem Probenkörper aufgebracht, wobei das Schlagelement einen Durchmesser von 20mm und eine Rundung von 2mm aufwies. Das Prüfstück wurde 1h nach der Fallbeanspruchung mit blossem Auge untersucht. Es wurde geprüft, ob die Deckschicht intakt ist oder irreversible Beschädigungen aufweist; dies wird im Allgemeinen durch Brechen oder Reissen der Oberflächenschicht angezeigt, welches sich bis auf die Unterlage der Wandbekleidung ausweiten kann. Die erfindungsgemässen Fliesenaufbauten sind nach EN 259-2 stossfest.

### Ausführungsbeispiel I

Eine Trägerschicht aus Polycarbonat mit einer Schichtdicke von ca. 150 µm von der Firma Bayer, angeboten von der Firma Coloiprint Techfilms unter dem Produktnamen Markopol®, wird auf der Vorderseite mit Siliziumoxid beschichtet, um eine Nanokeramikschicht zu erhalten. Hierzu wird die Elektronenstrahlverdampfung eingesetzt, um eine kontrollierte und gleichmäßige Verdampfung des Beschichtungsmaterials sowie eine hohe Transparenz zu erreichten. Die Schichtdicke beträgt etwa 8 µm.

In einem nächsten Schritt wird die der Siliciumoxidschicht abgewandte Seite der Trägerschicht mit einem Digitaldruckverfahren bedruckt. Die hierfür erforderlichen Anlagen werden beispielsweise von der Firma Müller Martini Druckmaschinen GmbH, Maulburg, angeboten.

In einem nächsten Schritt wird die so mit einem Dekor bedruckte Seite mit einem Vliesmaterial kaschiert.

Als letzte Schicht wird auf der Außenseite der Polycarbonatschicht eine Schicht aus organischen Polysilazanen aufgebracht. Hierzu wird eine 40 %ige Lösung des durch Formel (3) beschriebenen organischen Polysilazans in n-Butylacetat verwendet, die entsprechend additiviert wurde. Nach erfolgter Applikation wird bei 120 °C innerhalb von 1 h ausgehärtet.

Das so hergestellte Fliesenverbundmaterial kann durch an sich bekannte Klebstoffe auf dem Untergrund, insbesondere auf Wände oder Fußböden, angebracht werden. So werden beispielsweise Klebstoffe der Firma SIKA, Schweiz, eingesetzt. Auch für das Abdichten von Abschlüssen und Übergängen können Klebstoffe der Firma SIKA, selbstverständlich auch Klebstoffe und Abdichtmaterialien anderer Unternehmen, eingesetzt werden.

Als Prüfgeräte wurden verwendet: Pipetten, Watterondellen, Chemische Substanzen, Microfaserlappen, Bürsten und Scheuermittel.

Für die Durchführung wurden die Probenkörper mit 1ml bis 2ml der chemischen Substanz beträufelt. Falls diese davonlief, wurde eine Watterondelle aufgelegt. Die Haupteinwirkungsdauer betrug 2h.

Vor jeder Reinigung werden die noch feuchten Flecken mit Baumwolle abgetupft, wobei vom Rand beginnend zur Fleckenmitte hin gearbeitet wurde.

Nach der Reinigung werden die verbleibenden Flecken aus einer Entfernung von ungefähr 800mm unter einem Beobachtungswinkel von etwa 45° und bei langsamer Drehung des Beobachtungstisches von allen Richtungen aus betrachtet. Wenn ein Fleck sichtbar war, wurde dieser mit einem schwachen Schleifmittel oder einem im Handel erhältlichen Reinigungsmittel abgescheuert und erneut untersucht.

Als Probekörper wurden verwendet: Vaporex Dampfsperre für Nasszellen, Erfurt Raufasertapete, Kertala, herkömmliche Fliese.

Mit folgenden Substanzen wurde getestet: Terpentinöl, Leichtbenzin, Nagellackentferner, Wundermittel (Rädibuz), Suso^{®} Badreiniger, Durgol^{®} Entkalker, Cilit^{®} Bang Kalk und Rostreiniger, WC-Ente^{®}, Johannisbeersaft, Sonnenblumenöl, Rotwein, Chavelwasser, Schmierseife, Kaffee, denaturierter Ethanol, Wasserstoff-Peroxid und AmmoniakLösung 10%.

Als Index für die Klassifizierung des Ergebnisses nach Reinigen/Scheuern wurde die folgende Skala verwendet: 0 Unverändert, 1 Sehr wenig verändert, 2 Wenig verändert, 3 Verändert, 4 Stark verändert

Das Ergebnis ist in Tabelle 1 dargestellt. Das erfindungsgemäße Produkt ist als Kertala ® gekennzeichnet.

Der Testbericht hält fest: Alle getesteten Substanzen können mit einem Lappen und ein wenig Wasser einfach abgewischt werden. Flüssigkeiten Perlen stark ab. Es bilden sich Tropfen; Kertala® wird nicht feucht."

Auf dem Probekörper wird 300 mal gescheuert. Begonnen wird mit einem weichen Scheuermittel. Dann werden nach und nach härtere Mittel verwendet, solange bis der Probekörper eine sichtbare Veränderung der Oberfläche aufweist.

Als Probekörper wurden verwendet: Erfurt Raufasertapete, Vaporex^{®} Dampfsperre, Fliese, Kertala®

Als Scheuermittel wurden verwendet: Scotch Brite^{®} Schwamm orange (weich), Scotch Brite^{®} Schwamm blau (mittel hart), Bürste weich, Bürste hart, Scotch Brite^{®} Schwamm grün (hart), Stahlwatte, Schleifpapier P240

Als Index für die Klassifizierung des Ergebnisses nach Reinigen/Scheuern wurde die folgende Skala verwendet: 0 Unverändert, 1 Sehr wenig verändert, 2 Wenig verändert, 3 Verändert, 4 Stark verändert

Das Ergebnis ist in Tabelle 2 dargestellt.

Harte Schwämme wie "Scotchprint^{®} kraftvoll und dauerhaft" sind für Fliesen ungeeignet. Dasselbe gilt für Kertala^{®}. Hochglanzfliesen und Hochglanz-Kertala gehen schneller kaputt als matte. Kertala^{®} ist nahezu gleich kratzfest wie herkömmliche Fliesen.

Als Testvorrichtung wurde ein Probekörper mit einem Joule Energie unter einem Winkel von 30 Grad auf die Probe fallen gelassen. Das Schlagelement hatte einen Durchmesser von 20 mm und eine Rundung von 2 mm.

Das Prüfstück wurde 1h nach der Fallbeanspruchung mit blossem Auge untersucht. Es wurde geprüft, ob die Deckschicht intakt ist, oder ob sie irreversible Beschädigungen aufweist. Dies wird im Allgemeinen durch Brechen oder Reissen der Oberflächenschicht angezeigt, welches sich bis auf die Unterlage der

Wandbekleidung ausweiten kann.

Als Probenkörper wurden verwendet: hartes KERTALA^{®}, weiches KERTALA^{®}, elastisches KERTALA^{®}, Standardfliese, Duravit^{®} Spiegelfliese, AI DO Wandanstrich.

Hartgips als Untergrund erwies sich als zu weich, es musste Eternit verwendet werden, um aussagekräftige Resultate zu erzielen. Bei der Standardfliese führte der Test zu Schichtbrüchen. Bei der Duravot^{®} Spiegelfliese wurde die Glasur ebenfalls beschädigt. Bei AI DO erfolgte eine plastische Deformierung und eine Oberflächenbeschädigung. Bei KERTALA^{®} blieb die Oberfläche trotz leichter plastischer Deformation intakt. Damit übertrifft KERTALA^{®} die Eigenschaften herkömmlicher Fliesen und bisher bekannter alternativer Wandbeschichtungen, was das hohe Mass der Erfingung belegt.

Gemäss Norm ist KERTALA^{®} stossfest. Je nach verwendetem Träger waren die Auswirkungen des Stosstests unterschiedlich: ein hartes KERTALA^{®} führte zu keinen plastischen Deformationen, dafür rascher zu einer Beschädigung der Glasur; weiches KERTALA führte eher zu einer plastischen Deformation, dafür blieb die Glasur intakt. Am besten bewährt hat sich elastisches KERTALA, bei dem keine plastische Deformation erfolgte und die Oberfläche intakt blieb.

### Ausführungsbeispiel II

Eine 0,030 mm dicke Trägerfolie aus nicht weich geglühtem Aluminium wird auf der Rückseite mit einem Vliesmaterial der Firma Erfurt, welches unter dem Markennamen Vario Vlies® erhältlich ist, kaschiert. Bei dem Vlies handelt es sich um ein glattes Material, welches aus Zellstoff- und Textilfasern kombiniert mit polymeren Bindemitteln besteht. Die Aluminiumfolie hat Barriereeigenschaften, um den Durchtritt von Wassermolekülen zu verhindern.

Auf der Vorderseite des Aluminium-Trägermaterials wird eine keramische Siliziumoxidbeschichtung durch Elektronenstrahlverdampfung aufgebracht.

Auf die so erhaltene Siliziumoxidschicht wird eine organische Polysilazanschicht wie im Beispiel 1 beschrieben aufgebracht.

Der so erhaltene Fliesenaufbau kann mit an sich bekannten Klebstoffen mit dem Untergrund verbunden werden. Das gleiche gilt für das Abdichten von Abschlüssen und Übergängen, wozu an sich bekannte Abdichtungsmaterialien eingesetzt werden.

Die derart erfindungsgemäß hergestellten Fliesenaulbauten können in Rollenform hergestellt und, ähnlich wie Tapeten, auf den Untergrund angebracht werden. Der Untergrund kann vorbehandelt werden, insbesondere um Unebenheiten zu glätten, beispielsweise durch Auftragen eines Egalisierungsmittels mit hoher Viskosität oder durch Anbringung eines Vliesmaterials entweder direkt auf dem Untergrund oder durch Verwendung eines Fliesenaufbaus, welcher ein Vliesmaterial auf der der Polysilazan-Oberflächbeschicht abgewandten Seite aufweist. Der Untergrund wird mit handelsüblichen Klebstoffen, die mit dem aufwickelbaren Fliesenaufbaumaterial kompatibel sind, vorbehandelt, oder der Klebstoff wird direkt auf die der Polysilazanschicht gegenüber liegenden Oberfläche des Fliesenaufbaus aufgebracht. Die erfindungsgemäßen aufwickelbaren Fliesenverbundmaterialien werden in der geeigneten Länge zugeschnitten und Bahn für Bahn nebeneinander gesetzt. Die üblicherweise bei der Verlegung von keramischen Fliesen entstehenden Fugen werden auf ein absolutes Minimum reduziert, wie dies üblicherweise von Tapeten bekannt ist. Die Fliesenbahnen werden Stoß an Stoß auf dem Untergrund angebracht und können durch an sich bekannte Versiegelungsmaterialien, beispielsweise aus organischen Polysilazanen, miteinander so verbunden werden, dass eine maximale Oberflächenversiegelung entsteht. Auf diese Weise wird der Untergrund auch an den Stößen vollständig gegen das Eindringen von Flüssigkeiten und Gasen von außen abgedichtet.

Die durch das Anbringen der erfindungsgemäßen Fliesenverbundmaterialien erhaltenen Oberflächen sind leicht zu reinigen. Flüssige Verunreinigungen können durch einfaches Abwischen mit einem Tuch beseitigt werden, da die Flüssigkeit durch die Polysilazan-Oberflächenversiegelung nicht in den Fliesenaufbau eindringen kann. Feststoffverschmutzungen können ebenso durch einfaches Abwischen mit einem Tuch beseitigt werden. Hartnäckigere Feststoffverschmutzungen könne mit haushaltsüblichen, insbesondere umweltverträglichen Reinigungsmitteln, beispielsweise auch Spülmitteln, leicht abgewaschen werden. Die obigen Versuchsergebnisse zeigen die hervorragenden Reinigungseigenschaften der erfindungsgemäßen Fliesenverbundstoffe.

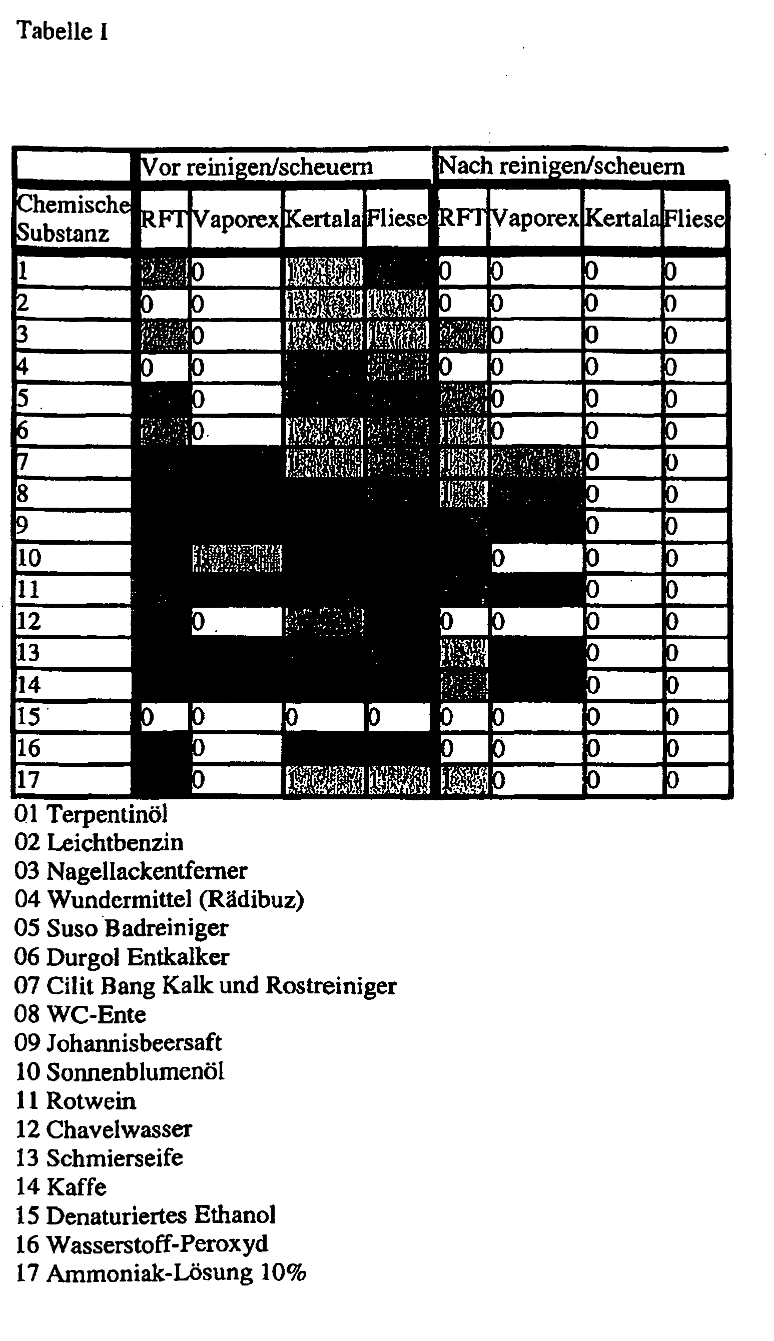

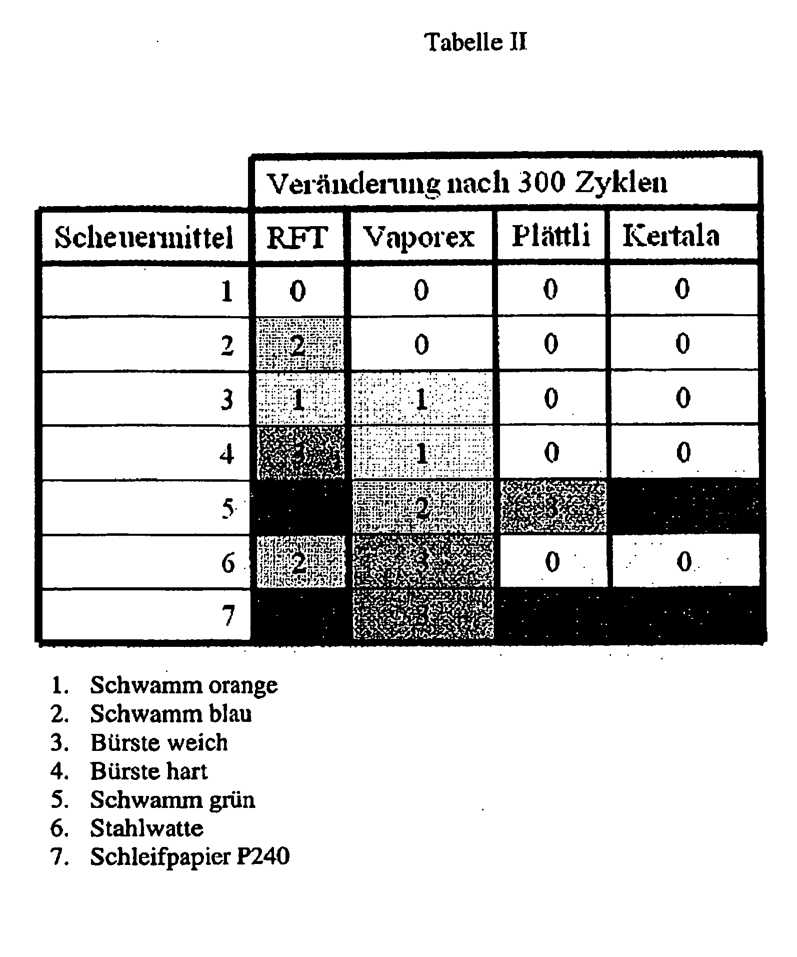

## Patentansprüche

1. Fliesenaufbau mit einer ersten Trägerschicht (1) und einer Oberflächenschicht (2), wobei der Fliesenaufbau insgesamt aufwickelbar ausgebildet ist,
**dadurch gekennzeichnet, dass**
die Oberflächenschicht (2) ein Netzwerk aus ausgehärteten organischen Polysilazanen aufweist..

2. Fliesenaufbau nach Anspruch 1,
**dadurch gekennzeichnet, dass**
auf der der Oberflächenschicht (2) abgewandten Seite der ersten Trägerschicht (1) eine Dekorschicht (4) vorgesehen ist.

3. Fliesenaufbau nach Anspruch 2,
**dadurch gekennzeichnet, dass**
auf der der ersten Trägerschicht (1) abgewandten Seite der Dekorschicht (4) eine zweite Trägerschicht (5) vorgesehen ist.

4. Fliesenaufbau nach Anspruch 1,
**dadurch gekennzeichnet, dass**
auf der der Oberflächenschicht (2) abgewandten Seite der ersten Trägerschicht (1) zumindest eine zweite Trägerschicht (5) vorgesehen ist.

5. Fliesenaufbau nach einem oder mehreren der vorhergehenden Ansprüche,
**dadurch gekennzeichnet, dass**
zwischen der ersten Trägerschicht (1) und der Oberflächenschicht (2) eine Nanokeramikschicht (3) vorgesehen ist.

6. Fliesenaufbau nach einem oder mehreren der vorgehenden Ansprüche,
**dadurch gekennzeichnet, dass**
zwischen der ersten Trägerschicht (1) und der Oberflächenschicht (2) eine Dekorschicht (4) vorgesehen ist.

7. Fliesenaufbau nach Anspruch 5,
**dadurch gekennzeichnet, dass**
zwischen der ersten Trägerschicht (1) und der Nanokeramikschicht (3) eine Dekorschicht (4) vorgesehen ist.

8. Fliesenaufbau nach einem oder mehreren der vorhergehenden Ansprüche,
**dadurch gekennzeichnet, dass**
als weitere Schichteneine Dämmschicht und/oder eine dritte Trägerschicht vorgesehen sind.

9. Fliesenaufbau nach einem oder mehreren der vorhergehenden Ansprüche,
**dadurch gekennzeichnet, dass**
die erste Trägerschicht (1) und/oder die zumindest eine zweite oder dritte Trägerschicht (5) aus einem Polymer-, Keramik-, Cellulose-, Glas- und/oder Metall- Material besteht oder dieses enthält,
wobei das Metall bevorzugt Aluminium, Kupfer, Chrom, Nickel, Zink, Titan, Vanadium, Magnesium, Eisen, und/oder Stahlund/oder Legierungen mit einem oder mehreren dieser Metalle ist, und
wobei das Polymer bevorzugt ein Polycarbonat, Polymethylmethacrylat, Polyetherketon, Polyamid, Polyethylenterephthalat, Polyyinylchlorid, ein Polyethylen, Polypropylen, Polystyrol, Polyolefin, insbesondere bevorzugt ein flexibles Polyolefin, oder eine Kombination mit einem oder mehreren dieser Polymere ist, oder die Trägerschicht (1,5) ein Vlies ist oder eine Kombination aus ein oder mehreren dieser Materialien.

10. Fliesenaufbau nach einem oder mehreren der vorhergehenden Ansprüche,
**dadurch gekennzeichnet, dass**
die Nanokeramikschicht (3) eine SiOx-Schicht ist.

11. Fliesenaufbau nach einem oder mehreren der vorhergehenden Ansprüche,
**dadurch gekennzeichnet, dass**
der Fliesenaufbau aus den nachfolgenden Kombinationen ausgewählt wird:
a)
- Oberflächenschicht (2)
- erste Trägerschicht (1), bevorzugt aus Aluminium, Polycarbonat oder flexiblem Polyolefin;
b)
- Oberflächenschicht (2)
- Nanokeramikschicht (3), bevorzugt aus SiOx
- erste Trägerschicht (1), bevorzugt aus Aluminium, Polycarbonat oder flexiblem Polyolefin;
c)
- Oberflächenschicht (2)
- Dekorschicht (4)
- erste Trägerschicht (1), bevorzugt aus Aluminium, Polycarbonat oder flexiblem Polyolefin;
d)
- Oberflächenschicht (2)
- erste Trägerschicht (1) aus einem transparenten oder semitransparenten Material, bevorzugt aus Polycarbonat oder flexiblem Polyolefin
- Dekorschicht (4);
e)
- Oberflächenschicht (2)
- Nanokeramikschicht (3), bevorzugt aus SiOx
- Dekorschicht (4)
- erste Trägerschicht (1), bevorzugt aus Aluminium, Polycarbonat oder flexiblem Polyolefin;
f)
- Oberflächenschicht (2)
- Nanokeramikschicht (3), bevorzugt aus SiOx
- erste Trägerschicht (1) aus einem transparenten oder semitransparenten Material, bevorzugt aus Polycarbonat oder flexiblem Polyolefin
- Dekorschicht (4)
- zweite Trägerschicht (5), bevorzugt aus Aluminium, Polycarbonat, einem Vliesmaterial oder flexiblem Polyolefin, wobei sie bevorzugt aus einem von der ersten Trägerschicht (1) verschiedenem Material ausgebildet ist;
g)
- Oberflächenschicht (2)
- erste Trägerschicht (1) aus einem transparenten oder semitransparenten Material, bevorzugt aus Polycarbonat oder flexiblem Polyolefin
- Dekorschicht (4)
- zweite Trägerschicht (5), bevorzugt aus Aluminium, Polycarbonat, einem Vliesmaterial oder flexiblem Polyolefin, wobei sie bevorzugt aus einem von der ersten Trägerschicht (1) verschiedenem Material ausgebildet ist.

12. Fliesenaufbau nach einem oder mehreren der vorhergehenden Ansprüche,
**dadurch gekennzeichnet, dass**
die Oberflächenschicht (2) eine Dicke von mindestens 1 µm, bevorzugt 2 bis 20 µm, die Nanokeramikschicht (3) eine Dicke von mindestens 1 µm, bevorzugt 3 bis 15 µm, die erste und/oder zweite Trägerschicht (1, 5) eine Dicke von jeweils 100 - 200 µm aufweist und die Gesamtdicke des Fliesenaufbaus von 300 - 1000 µm, bevorzugt 400 - 600 µm beträgt.

13. Fliesenaufbau nach einem oder mehreren der vorgehenden Ansprüche,
**dadurch gekennzeichnet, dass**
das ausgehärtete organische Polysilazan-Netzwerk der Oberflächenschicht (2) die allgemeine Strukturformel (1) besitzt, deren Polymerketten abwechselnd aus Silizium- und Stickstoff-Atomen aufgebaut sind -(SiR'R"-NR"')n- (1)
wobei R', R", R"' unabhängig voneinander für Wasserstoff oder einen gegebenenfalls substituierten Alkyl-, Aryl-, Vinyl oder (Trialkoxysilyl)alkyl-Rest stehen, mit der Maßgabe, dass nicht alle Reste R', R" und R"' gleichzeitig für Wasserstoff stehen, wobei es sich bei n um eine ganze Zahl handelt und n so bemessen ist, dass das Polysilazan ein zahlenmittleres Molekulargewicht von 150 bis 150.000 g/mol aufweist.

14. Verfahren zur Herstellung eines aufwickelbaren Fliesenaufbaus nach einem oder mehreren der vorhergehenden Ansprüche mit folgenden Verfahrensschritten:
Vorsehen einer ersten Trägerschicht (1); und
Aufbringen einer Oberflächenschicht (2) auf der ersten Trägerschicht (1);
wobei der Fliesenaufbau insgesamt aufwickelbar ausgebildet wird,
**dadurch gekennzeichnet, dass**
die Oberflächenschicht (2) durch Aushärten eines organischen Polysilazan-Netzwerks hergestellt wird.

15. Verfahren nach Anspruch 14,
**dadurch gekennzeichnet, dass**
auf der der Oberflächenschicht (2) abgewandten Seite der ersten Trägerschicht (1) zumindest eine zweite Trägerschicht (5), wahlweise in Verbindung mit einer Nanokeramikschicht (3) und/oder einer Dekorschicht (4), aufgebracht wird.

16. Verwendung eines aufwickelbaren Fliesenaufbaus nach einem oder mehreren der vorhergehenden Ansprüche zur Herstellung eines Fliesenbelages auf Wänden, Decken und/oder Fußböden.

17. Verwendung einer Oberflächenschicht (2), die ein ausgehärtetes organisches Polysilazan-Netzwerk aufweist, zur Herstellung eines aufwickelbaren Fliesenaufbaus nach einem oder mehreren der vorhergehenden Ansprüche.

## Claims

1. Tile structure having a first carrier layer (1) and a surface layer (2), wherein the tile structure as a whole is in rollable form,
**characterised in that**
the surface layer (2) comprises a network of cured organic polysilazanes.

2. Tile structure according to claim 1,
**characterised in that**
a decorative layer (4) is provided on the side of the first carrier layer (1) that is remote from the surface layer (2).

3. Tile structure according to claim 2,
**characterised in that**
a second carrier layer (5) is provided on the side of the decorative layer (4) that is remote from the first carrier layer (1).

4. Tile structure according to claim 1,
**characterised in that**
at least a second carrier layer (5) is provided on the side of the first carrier layer (1) that is remote from the surface layer (2).

5. Tile structure according to one or more of the preceding claims,
**characterised in that**
a nano-ceramic layer (3) is provided between the first carrier layer (1) and the surface layer (2).

6. Tile structure according to one or more of the preceding claims,
**characterised in that**
a decorative layer (4) is provided between the first carrier layer (1) and the surface layer (2).

7. Tile structure according to claim 5,
**characterised in that**
a decorative layer (4) is provided between the first carrier layer (1) and the nano-ceramic layer (3).

8. Tile structure according to one or more of the preceding claims,
**characterised in that**
an insulating layer and/or a third carrier layer are provided as further layers.

9. Tile structure according to one or more of the preceding claims,
**characterised in that**
the first carrier layer (1) and/or the at least a second or third carrier layer (5) consists of or contains a polymer, ceramic, cellulose, glass and/or metal material,
wherein the metal is preferably aluminium, copper, chromium, nickel, zinc, titanium, vanadium, magnesium, iron and/or steel and/or alloys containing one or more of those metals, and
wherein the polymer is preferably a polycarbonate, polymethyl methacrylate, polyether ketone, polyamide, polyethylene terephthalate, polyvinyl chloride, a polyethylene, polypropylene, polystyrene, polyolefin, particularly preferably a flexible polyolefin, or a combination of one or more of those polymers, or the carrier layer (1, 5) is a nonwoven or a combination of one or more of those materials.

10. Tile structure according to one or more of the preceding claims,
**characterised in that**
the nano-ceramic layer (3) is an SiOx layer.

11. Tile structure according to one or more of the preceding claims,
**characterised in that**
the tile structure is selected from the following combinations:
a)
- surface layer (2)
- first carrier layer (1), preferably of aluminium, polycarbonate or flexible polyolefin;
b)
- surface layer (2)
- nano-ceramic layer (3), preferably of SiOx
- first carrier layer (1), preferably of aluminium, polycarbonate or flexible polyolefin;
c)
- surface layer (2)
- decorative layer (4)
- first carrier layer (1), preferably of aluminium, polycarbonate or flexible polyolefin;
d)
- surface layer (2)
- first carrier layer (1) of a transparent or semi-transparent material, preferably of polycarbonate or flexible polyolefin
- decorative layer (4);
e)
- surface layer (2)
- nano-ceramic layer (3), preferably of SiOx
- decorative layer (4)
- first carrier layer (1), preferably of aluminium, polycarbonate or flexible polyolefin;
f)
- surface layer (2)
- nano-ceramic layer (3), preferably of SiOx
- first carrier layer (1) of a transparent or semi-transparent material, preferably of polycarbonate or flexible polyolefin
- decorative layer (4)
- second carrier layer (5), preferably of aluminium, polycarbonate, a nonwoven material or flexible polyolefin, it preferably being formed of a different material from the first carrier layer (1);
g)
- surface layer (2)
- first carrier layer (1) of a transparent or semi-transparent material, preferably of polycarbonate or flexible polyolefin
- decorative layer (4)
- second carrier layer (5), preferably of aluminium, polycarbonate, a nonwoven material or flexible polyolefin, it preferably being formed of a different material from the first carrier layer (1).

12. Tile structure according to one or more of the preceding claims, **characterised in that**
the surface layer (2) has a thickness of at least 1 µm, preferably from 2 to 20 µm, the nano-ceramic layer (3) has a thickness of at least 1 µm, preferably from 3 to 15 µm, the first and/or second carrier layer (1, 5) has a thickness of in each case from 100 to 200 µm, and the total thickness of the tile structure is from 300 to 1000 µm, preferably from 400 to 600 µm.

13. Tile structure according to one or more of the preceding claims,
**characterised in that**
the cured organic polysilazane network of the surface layer (2) has the general structural formula (1), the polymer chains of which are composed alternately of silicon and nitrogen atoms -(SiR'R"-NR"')n- (1)
wherein R', R", R"' independently of one another represent hydrogen or an optionally substituted alkyl, aryl, vinyl or (trialkoxysilyl)alkyl radical, with the proviso that all the radicals R', R" and R"' do not simultaneously represent hydrogen, wherein n is an integer and n is such that the polysilazane has a number-average molecular weight of from 150 to 150,000 g/mol.

14. Process for the production of a rollable tile structure according to one or more of the preceding claims, having the following process steps:
provision of a first carrier layer (1); and
application of a surface layer (2) to the first carrier layer (1);
wherein the tile structure as a whole is in rollable form,
**characterised in that**
the surface layer (2) is produced from a cured organic polysilazane network.

15. Process according to claim 14,
**characterised in that**
at least a second carrier layer (5), optionally in conjunction with a nano-ceramic layer (3) and/or a decorative layer (4), is applied to the side of the first carrier layer (1) that is remote from the surface layer (2).

16. Use of a rollable tile structure according to one or more of the preceding claims in the production of a tiled covering on walls, ceilings and/or floors.

17. Use of a surface layer (2) comprising a cured organic polysilazane network in the production of a rollable tile structure according to one or more of the preceding claims.

## Revendications

1. Structure de carrelage présentant une première couche de support (1) et une couche superficielle (2), la structure de carrelage étant formée globalement de manière enroulable, **caractérisée par le fait que** la couche superficielle (2) présente une réseau de polysilazanes organiques durcis.

2. Structure de carrelage selon la revendication 1, **caractérisée par le fait qu'**une couche de décoration (4) est prévue sur la face opposée à la couche superficielle (2) de la première couche de support (1).

3. Structure de carrelage selon la revendication 2, **caractérisée par le fait qu'**une seconde couche de support (5) est prévue sur la face opposée à la première couche de support (1) de la couche de décoration (4).

4. Structure de carrelage selon la revendication 1, **caractérisée par le fait qu'**au moins une seconde couche de support (5) est prévue sur la face opposée à la couche superficielle (2) de la première couche de support (1).

5. Structure de carrelage selon l'une ou plusieurs des revendications précédentes, **caractérisée par le fait qu'**une couche nanocéramique (3) est prévue entre la première couche de support (1) et la couche superficielle (2).

6. Structure de carrelage selon l'une ou plusieurs des revendications précédentes, **caractérisée par le fait qu'**une couche de décoration (4) est prévue entre la première couche de support (1) et la couche superficielle (2).

7. Structure de carrelage selon la revendication 5, **caractérisée par le fait qu'**une couche de décoration (4) est prévue entre la première couche de support (1) et la couche nanocéramique (3).

8. Structure de carrelage selon l'une ou plusieurs des revendications précédentes, **caractérisée par le fait que** des couches supplémentaires, comme une couche isolante et/ou une troisième couche de support, sont prévues.

9. Structure de carrelage selon l'une ou plusieurs des revendications précédentes, **caractérisée par le fait que**
la première couche (1) et/ou au moins une seconde ou une troisième couche de support (5) est constituée d'un matériau en polymère, céramique, cellulose, et/ou verre ou en comporte,
le métal étant préférentiellement de l'aluminium, du cuivre, du chrome, du nickel, du zinc, du titane, du vanadium, du magnésium, du fer, et/ou de l'acier et/ou des alliages constitués d'un ou de plusieurs de ces métaux, et le polymère étant préférentiellement un polycarbonate, un polyméthylméthacrylate, une polyéthercétone, un polyamide, un polyéthylenterephthalate, un polychlorure de vinyle, un polyéthylène, un polypropylène, un polystyrol, un polyoléfine, en particulier préférentiellement un polyoléfine flexible, ou une combinaison d'un ou de plusieurs de ces polymères, ou la couche de support (1, 5) étant un intissé ou une combinaison d'un ou de plusieurs de ces matériaux.

10. Structure de carrelage selon l'une ou plusieurs des revendications précédentes, **caractérisée par le fait que** la couche nanocéramique (3) est une couche SiOx.

11. Structure de carrelage selon l'une ou plusieurs des revendications précédentes, **caractérisée par le fait que** la structure de carrelage est choisie parmi les combinaisons suivantes :
a)
- couche superficielle (2)
- première couche de support (1), préférentiellement en aluminium, en polycarbonate ou en polyoléfine flexible ;
b)
- couche superficielle (2)
- couche nanocéramique (3), préférentiellement en SiOx
- première couche de support (1), préférentiellement en aluminium, en polycarbonate ou en polyoléfine flexible ;
c)
- couche superficielle (2)
- couche de décoration (4)
- première couche de support (1), préférentiellement en aluminium, en polycarbonate ou en polyoléfine flexible ;
d)
- couche superficielle (2)
- première couche de support (1) en matériau transparent ou semi-transparent, préférentiellement en polycarbonate ou en polyoléfine flexible
- couche de décoration (4) ;
e)
- couche superficielle (2)
- couche nanocéramique (3), préférentiellement en SiOx
- couche de décoration (4)
- première couche de support (1), préférentiellement en aluminium, en polycarbonate ou en polyoléfine flexible ;
f)
- couche superficielle (2)
- couche nanocéramique (3), préférentiellement en SiOx
- première couche de support (1) en matériau transparent ou semi-transparent, préférentiellement en polycarbonate ou en polyoléfine flexible
- couche de décoration (4)
- seconde couche de support (5), préférentiellement en aluminium, en polycarbonate, en intissé ou en polyoléfine flexible, étant formée préférentiellement d'un matériau différent de celui de la première couche de support (1) ;
g)
- couche superficielle (2)
- première couche de support (1) en matériau transparent ou semi-transparent, préférentiellement en polycarbonate ou en polyoléfine flexible
- couche de décoration (4)
- seconde couche de support (5), préférentiellement en aluminium, en polycarbonate, en intissé ou en polyoléfine flexible, étant formée préférentiellement d'un matériau différent de celui de la première couche de support (1).

12. Structure de carrelage selon l'une ou plusieurs des revendications précédentes, **caractérisée par le fait que** la couche superficielle (2) présente une épaisseur d'au moins 1 µm, préférentiellement 2 à 20 µm, la couche nanocéramique (3) présente une épaisseur d'au moins 1 µm, préférentiellement 3 à 15 µm, la première et/ou la seconde couche de support (1, 5) présente une épaisseur respective de 100 à 200 µm et l'épaisseur globale de la structure de carrelage est de 300 à 1000 µm, préférentiellement 400 à 600 µm.

13. Structure de carrelage selon l'une ou plusieurs des revendications précédentes, **caractérisée par le fait que** le réseau de polysilazanes organiques durci de la couche superficielle (2) possède la formule de structure (1) générale, dont les chaînes polymères sont constituées en alternance d'atomes de silicium et d'azote -(SiR'R"-NR"')n- (1), R', R", R"' représentant indépendamment les uns des autres l'hydrogène ou un reste alkyle, aryle, vinyle ou (trialkoxysilyl)alkyle, étant entendu que tous les restes R', R" et R' ne représentent pas simultanément l'hydrogène, n étant un nombre entier et étant mesuré de telle sorte que le polysilazane présente un poids moléculaire moyen de 150 à 150.000 g/mol.

14. Procédé de fabrication d'une structure de carrelage enroulable selon l'une ou plusieurs des revendications précédentes, comprenant les étapes de procédé suivantes :
- prévision d'une première couche de support (1) ; et
- application d'une couche superficielle (2) sur la première couche de support (1) ;
la structure de carrelage étant formée globalement de manière enroulable, **caractérisé par le fait que** la couche superficielle (2) est fabriquée par durcissement d'un réseau de polysilazanes organiques.

15. Procédé selon la revendication 14, **caractérisé par le fait qu'**au moins une seconde couche de support (5) est appliquée sur la face opposée à la couche superficielle (2) de la première couche de support (1), au choix en liaison avec une couche nanocéramique (3) et/ou une couche de décoration (4).

16. Utilisation d'une structure de carrelage enroulable selon l'une ou plusieurs des revendications précédentes pour la fabrication d'un revêtement en carrelage sur des murs, plafonds et/ou sols.

17. Utilisation d'une couche superficielle (2), qui présente un réseau de polysilazanes organiques durci, pour la fabrication d'une structure de carrelage enroulable selon l'une ou plusieurs des revendications précédentes.
